# NEUE EUROPÄISCHE PATENTSCHRIFT

(11) **EP 3 996 961 B2**
(45) Veröffentlichungstag und Bekanntmachung des Hinweises auf die Entscheidung über den Einspruch: **19.08.2026**
(45) Hinweis auf die Patenterteilung: 13.09.2023
(21) Anmeldenummer: 20739941.1
(22) Anmeldetag: 09.07.2020
(51) Int. Cl.: B60T 13/38, B60T 13/68, B60T 15/04

(54) **PARKBREMSEINRICHTUNG FÜR EIN NUTZFAHRZEUG**
PARKING BRAKE DEVICE FOR A COMMERCIAL VEHICLE
FREIN DE STATIONNEMENT POUR UNE VÉHICULE UTILITAIRE

(30) Priorität: 12.07.2019 DE 102019118895
(43) Veröffentlichungstag der Anmeldung: 18.05.2022
(73) Patentinhaber: KNORR-BREMSE Systeme für Nutzfahrzeuge GmbH, 80809 München (DE)
(72) Erfinder: SCHNITTGER, Karsten, 80935 München (DE)
(74) Vertreter: WENDE IP GbR
(86) Internationale Anmeldenummer: PCT/EP2020/069412
(87) Internationale Veröffentlichungsnummer: WO 2021/009007

(56) Entgegenhaltungen:
- EP-A1- 1 953 054
- EP-B1- 2 099 666
- DE-A1- 102006 055 569
- DE-A1- 102008 014 458
- DE-A1- 102012 013 959
- DE-A1- 102015 011 296
- DE-A1- 102016 117 836

## Beschreibung

Die vorliegende Erfindung betrifft eine Parkbremseinrichtung für ein Nutzfahrzeug mit wenigstens einem ersten Anschluss an eine Druckluftquelle und wenigstens einem zweiten Anschluss an eine Druckluftquelle.

Aus dem Stand der Technik sind bereits Parkbremseinrichtungen für Nutzfahrzeuge bekannt. Im Zusammenhang mit Nutzfahrzeugen werden pneumatische Bremssysteme benutzt, mit denen die Federspeicherbremszylinder eines Nutzfahrzeugs, aber auch das Bremssystem eines Anhängers benutzt werden können.

Aus dem Stand der Technik sind bereits Bremssysteme bekannt. So offenbart die DE 10 2015 107 125 A1 eine Vorrichtung zum Steuern einer Bremsanlage für ein Nutzfahrzeug mit einem Parkbremssteuerventil zum Bereitstellen einer Parkbremsfunktion für das Nutzfahrzeug und einem Anhängersteuerventil zum Bereitstellen einer Feststellbremsfunktion und einer Funktion des elektrischen Bremsens für den Anhänger. Des Weiteren betrifft die DE 10 2006 055 569 A1 eine Feststellbremsvorrichtung für ein pneumatisches Bremssystem eines Nutzfahrzeugs.

Die DE 10 2016 117 836 A1 offenbart eine Luftaufbereitungseinheit für eine Bremsanlage eines Nutzfahrzeuges. Die Luftaufbereitungseinheit umfasst ein Fußbremsmodulanschluss zum pneumatischen Koppeln der Luftaufbereitungseinheit mit einem Fußbremsmodul der Bremsanlage, zumindest eine Ventileinheit zum Beaufschlagen des Fußbremsmodulanschlusses und einem Steuerdruck- und einem Steuergerät zum Ansteuern der Ventileinheit.

Die DE 10 2016 117 837 A1 betrifft eine Luftaufbereitungseinheit für eine Bremsanlage eines Nutzfahrzeugs. Die Luftaufbereitungseinheit umfasst einen Steuerventilanschluss zum pneumatischen Koppeln der Luftaufbereitungseinheit mit zumindest einem Radbremszylinder der Bremsanlage vorgeschalteten Steuerventil zum Ändern eines Bremsdrucks im Radbremszylinder, ein Beaufschlagungsventil zum Aufschlagen des Steuerventilanschlusses mit einem Solldruck und ein Steuergerät zum Ansteuern des Beaufschlagungsventils.

Die DE 10 2017 102 074 A1 betrifft ein Schnittstellenelement für ein Fahrzeug umfassend elektronische Komponenten, wobei die elektronischen Komponenten wenigstens einen Anschluss an wenigstens eine Datenschnittstelle eines Nutzfahrzeuges aufweisen, wobei der Anschluss geeignet und beschaffen ist zum Austausch von Messdaten und/oder Steuerungs- und/oder Regelungsdaten zur Regelung von elektronischen Komponenten, wobei die elektronischen Komponenten weiter wenigstens eine integrierte Mess- und/oder Steuerungs- und/oder Regelungseinheit aufweisen.

Die WO 2016/177475 A1 betrifft eine Vorrichtung zum Steuern einer Bremsanlage für ein Nutzfahrzeug und eine Bremsanlage.

Die EP 2 794 368 B1 betrifft ein elektronisch gesteuertes pneumatisches Bremssystem für ein Automobil und ein Automobil mit einem solchen System.

Bestehende Systeme, aber auch neue Bremssysteme für Nutzfahrzeuge sollen im Hinblick auf zukünftig teilautonom oder autonom fahrende Lastkraftwagen nachgerüstet bzw. weiterentwickelt werden. Hierfür sind Änderungen am Bremssystem erforderlich.

Es ist die Aufgabe der vorliegenden Erfindung, eine Parkbremseinrichtung der eingangs genannten Art in vorteilhafter Weise weiterzubilden, insbesondere dahingehend, dass die Möglichkeit die Anforderungen von teilautonom oder autonom fahrenden Lastkraftwagen erfüllt werden können.

Diese Aufgabe wird erfindungsgemäß gelöst durch eine Parkbremseinrichtung mit den Merkmalen des Anspruchs 1.

Die Erfindung basiert auf dem Grundgedanken, dass bei einer Parkbremseinrichtung neben einer ersten Bistabilventilanordnung, die Federspeicherbremszylinder des Fahrzeugs, insbesondere eines Nutzfahrzeugs, betätigt, noch ein zusätzlicher Bremskreis integriert wird, der eine Redundanz-Steuerventilanordnung aufweist und eine redundante Bremsmöglichkeit bereitstellt. Um auch bei einem Ausfall des Elektroniksystems die beiden Bremssysteme unabhängig voneinander ansteuern zu können, ist sowohl ein erstes Steuerelektronikmodul als auch ein zweites Steuerelektronikmodul vorgesehen. Das erste Steuerelektronikmodul ist dabei unabhängig vom zweiten Steuerelektronikmodul betreibbar, so dass auch auf Elektronikebene eine Redundanz bereitgestellt wird.

Das erste und zweite Steuerelektronikmodul weisen (vorzugsweise) voneinander getrennte Stromversorgungen auf, so dass eine redundante Stromversorgung eine weitere Erhöhung der Betriebssicherheit gewährleistet.

Des Weiteren kann vorgesehen sein, dass die bistabile Ventilanordnung wenigstens ein TCI-Steuerventil umfasst, das derart beschaffen und eingerichtet ist, dass zumindest eine Steuerleitung eines Bistabilventils der Bistabilventilanordnung steuerbar ist, wobei die Steuerleitung an eine Druckluftquelle anschließbar ist. Das TCI-Steuerventil kann ein Magnetventil sein. Denkbar ist weiter, dass das TCI-Steuerventil ein 2/2-Magnetventil ist. Die Ansteuerung der Steuerleitung kann durch entsprechendes Öffnen und Schließen bzw. Freigeben bzw. Schließen der Leitung erfolgen. Im geschlossenen Zustand des TCI-Steuerventils wird diese Leitung bzw. die Zuleitung zur Steuerleitung abgeschlossen.

Darüber hinaus kann vorgesehen sein, dass das TCI-Steuerventil mittels des ersten Steuerelektronikmoduls ansteuerbar ist.

Außerdem kann vorgesehen sein, dass die Bistabilventilanordnung wenigstens ein TCO-Steuerventil umfasst, dass derart beschaffen und eingerichtet ist, dass die Steuerleitung des Bistabilventils entlüftbar ist. Bei dem TCO-Steuerventil kann es sich ebenfalls um ein Magnetventil handeln. Das Magnetventil kann ein 2/2-Magnetventil sein.

Das TCO-Steuerventil kann mittels des ersten Steuerelektronikmoduls ansteuerbar sein. Hierüber wird eine komplette Ansteuerung der Bistabilventilanordnung in elektronischer und pneumatischer Hinsicht ermöglicht. Insbesondere kann vorgesehen sein, dass die Druckluftquelle für das TCI-Steuerventil und das TCO-Steuerventil und damit für die gesamte Bistabilventilanordnung verwendet wird, insbesondere wobei eine von der Redundanz-Steuerventilanordnung unabhängige Druckluftquelle hier verwendet wird.

Außerdem kann vorgesehen sein, dass die Redundanz-Steuerventilanordnung wenigstens ein IV-Steuerventil umfasst, das derart beschaffen und eingerichtet ist, dass zumindest eine Steuerleitung eines Redundanz-Steuerventils steuerbar ist. Hierbei kann es sich bei dem IV-Steuerventil ebenfalls um ein Magnetventil handeln. Insbesondere kann ein 2/2-Magnetventil verwendet werden. Der pneumatische Anschluss des IV-Steuerventils kann an eine zweite Druckluftquelle oder eine von der ersten Druckluftquelle unterschiedlichen Druckluftquelle angeschlossen sein. Dies ist jedoch nicht zwingend. Denkbar ist, dass dieselbe Druckluftquelle verwendet wird, dann aber unterschiedliche Zuleitungen bestehen.

Das IV-Steuerventil kann mittels des zweiten Steuerelektronikmoduls ansteuerbar sein. Hierdurch wird eine redundante Ansteuerung in elektronischer Hinsicht ermöglicht.

Des Weiteren kann vorgesehen sein, dass die Redundanz-Steuerventilanordnung wenigstens ein OV-Steuerventil umfasst, das derart beschaffen und eingerichtet ist, dass die Steuerleitung des Redundanz-Steuerventils entlüftbar ist. Hierdurch kann die Zuleitung des Redundanz-Steuerventils ermöglicht werden.

Bei dem Redundanz-Steuerventil kann es sich um ein Relaisventil handeln. Hierdurch wird eine einfache pneumatische Ansteuerung des Redundanz-Steuerventils ermöglicht. Über die elektronische Ansteuerung des IV-Steuerventils und des OV-Steuerventils wird es dann entsprechend möglich, die pneumatische Ansteuerung des Redundanz-Steuerventils zu realisieren.

Das OV-Steuerventil kann ebenfalls mittels des zweiten Steuerelektronikmoduls ansteuerbar sein. Hierdurch wird es möglich, die gesamte Redundanz-Steuerventilanordnung mittels des zweiten Steuerelektronikmoduls anzusteuern und damit unabhängig vom ersten Steuerelektronikmodul. Ein Ausfall des ersten Steuerelektronikmoduls hat somit keine Auswirkung auf die elektronische Ansteuerbarkeit der Redundanzsteuerventilanordnung.

Außerdem kann vorgesehen sein, dass die erste Anschlussleitung an eine erste Druckluftquelle und die zweite Anschlussleitung an eine zweite von der ersten Druckluftquelle unterschiedlichen Druckluftquelle angeschlossen oder anschließbar ist.

Außerdem ist möglich, dass das TCI-Steuerventil und das TCO-Steuerventil an die erste Anschlussleitung angeschlossen oder anschließbar sind und/oder dass das IV-Steuerventil und das OV-Steuerventil an die zweite Anschlussleitung angeschlossen oder anschließbar sind.

Des Weiteren kann vorgesehen sein, dass das TCI-Steuerventil und das TCO-Steuerventil und das IV-Steuerventil und das OV-Steuerventil an die erste Anschlussleitung angeschlossen oder anschließbar sind. Dies stellt eine Möglichkeit dar, lediglich mit einer einzigen Druckluftquelle auskommen zu können. In diesem Fall werden gesonderte pneumatische Anschlüsse vorgesehen, beispielsweise innerhalb der Systemgrenze der Parkbremseinrichtung, um gesonderte pneumatische Zuleitungen innerhalb der Parkbremseinrichtung für das TCI-Steuerventil und das TCO-Steuerventil auf der einen Seite und das IV-Steuerventil und das OV-Steuerventil auf der anderen Seite bereitstellen zu können.

Außerdem kann vorgesehen sein, dass die erste Anschlussleitung und die zweite Anschlussleitung an dieselbe Druckluftquelle angeschlossen sind.

Darüber hinaus ist denkbar, dass das TCI-Steuerventil die Funktion eines IV-Steuerventils mitübernimmt und sowohl zur Ansteuerung des Bistabilventils als auch zur Ansteuerung des Redundanz-Steuerventils dient. Grundsätzlich ist in diesem Fall aber denkbar, dass das TCI-Steuerventil und das IV-Steuerventil sowohl von dem ersten Steuerelektronikmodul als auch unabhängig davon vom zweiten Steuerelektronikmodul angesteuert werden können. Hierdurch wird zumindest eine Redundanz in elektronischer Hinsicht erreicht. Ferner kann aufgrund der doppelten Funktionsbelegung des TCI-Steuerventils eine hohe Funktionalitätsdichte bei einer verringerten Anzahl an eingesetzten Steuerventilen (insbesondere das IV-Steuerventil kann entfallen) erzielt werden. Hierdurch ist die Parkbremseinrichtung insgesamt einfacher aufgebaut, was zusätzlich in einer sichereren und kostengünstigeren Parkbremseinrichtung resultiert.

Zudem ist vorstellbar, dass das TCO-Steuerventil die Funktion eines OV-Steuerventils mitübernimmt und sowohl zur Ansteuerung des Bistabilventils als auch zur Ansteuerung des Redundanz-Steuerventils dient. Analog zur Funktion des TCI-Steuerventils, das die Funktion eines IV-Steuerventils mitübernimmt, ist diesbezüglich denkbar, dass sowohl das TCO-Steuerventil und das OV-Steuerventil sowohl von dem ersten Steuerelektronikmodul als auch unabhängig davon vom zweiten Steuerelektronikmodul angesteuert werden können. Hierdurch wird zumindest eine Redundanz in elektronischer Hinsicht erreicht. Zudem kann aufgrund der doppelten Funktionsbelegung des TCO-Steuerventils eine hohe Funktionalitätsdichte bei einer verringerten Anzahl an eingesetzten Steuerventilen (insbesondere das OV-Steuerventil kann entfallen) erzielt werden. Hierdurch ist die Parkbremseinrichtung insgesamt einfacher aufgebaut, was zusätzlich in einer sichereren und kostengünstigeren Parkbremseinrichtung resultiert.

Weitere Einzelheiten und Vorteile der Erfindung sollen nun anhand der in den Zeichnungen näher dargestellten Ausführungsbeispiele erläutert werden.

Es zeigen:
- Fig. 1: ein erstes Ausführungsbeispiel einer nicht erfindungsgemäßen Parkbremseinrichtung;
- Fig. 2: ein zweites Ausführungsbeispiel einer nicht erfindungsgemäßen Parkbremseinrichtung;
- Fig. 3: ein drittes Ausführungsbeispiel einer nicht erfindungsgemäßen Parkbremseinrichtung;
- Fig. 4: ein viertes Ausführungsbeispiel einer erfindungsgemäßen Parkbremseinrichtung;
- Fig. 5a: ein fünftes Ausführungsbeispiel einer nicht erfindungsgemäßen Parkbremseinrichtung;
- Fig. 5b: ein sechstes Ausführungsbeispiel einer erfindungsgemäßen Parkbremseinrichtung;
- Fig. 6: ein siebtes Ausführungsbeispiel einer nicht erfindungsgemäßen Parkbremseinrichtung;
- Fig. 7a: ein achtes Ausführungsbeispiel einer nicht erfindungsgemäßen Parkbremseinrichtung;
- Fig. 7b: ein neuntes Ausführungsbeispiel einer erfindungsgemäßen Parkbremseinrichtung;
- Fig. 8: ein zehntes Ausführungsbeispiel einer nicht erfindungsgemäßen Parkbremseinrichtung; und
- Fig. 9: ein erstes Ausführungsbeispiel einer elektronischen Bremseinrichtung mit einer Parkbremseinrichtung gemäß Fig. 1 bis 4.

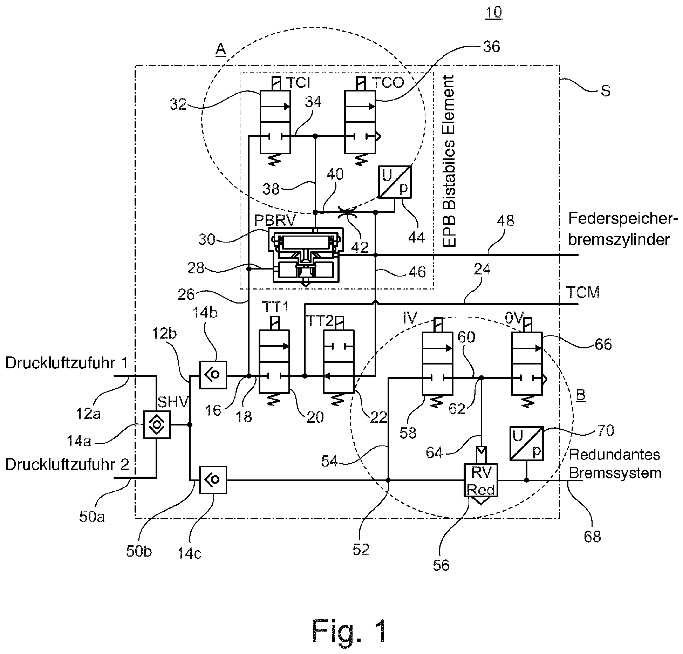

Fig. 1 zeigt in schematischer Darstellung ein erstes Ausführungsbeispiel einer Parkbremseinrichtung 10.

Die Systemgrenze S der Parkbremseinrichtung 10 ist durch eine gestrichelte Linie gekennzeichnet bzw. eingezeichnet.

Die Parkbremseinrichtung 10 weist dabei eine erste und eine zweite Druckluftzufuhr bzw. Anschlussleitung 12a, 50a (supply 1, supply 2) auf.

Diese erste und/oder zweite Druckversorgungsleitung 12a, 50a sind/ist an eine Druckluftquelle, wie beispielsweise einen Kompressor angeschlossen bzw. anschließbar.

Alternativ oder zusätzlich kann vorgesehen sein, dass die erste und/oder zweite Druckluftzufuhr 12a, 50a von einem entsprechenden Anschluss für eine Parkbremseinrichtung eines Mehrkreisschutzventils (nicht in Fig. 1 gezeigt) versorgt werden/wird.

Die erste und zweite Anschlussleitung 12a, 50a vereinigen sich zunächst über ein Wechselventil 14a zu einer gemeinsamen Anschlussleitung zur Versorgung der Parkbremseinrichtung 10 mit Druckluft.

Das Wechselventil 14a ist als sogenanntes Select-High-Ventil 14a ausgestaltet.

Stromabwärts des Wechselventils 14a verzweigt sich die gemeinsame Anschlussleitung wieder zu der ersten und zweiten Anschlussleitung 12b, 50b.

In der ersten Anschlussleitung 12b ist ein erstes Rückschlagventil 14b angeordnet und in der zweiten Anschlussleitung 50b ist ein zweites Rückschlagventil 14c angeordnet.

Stromabwärts des Rückschlagventils 14b ist ein Verzweigungspunkt 16 vorgesehen, von dem eine erste Leitung 18 und eine zweite Leitung 26 abzweigt.

Stromabwärts der Leitung 18 ist ein erstes Steuerventil 20 für die Ansteuerung des nicht näher dargestellten Anhängersteuermoduls (TCM) vorgesehen.

Stromabwärts des Steuerventils 20 zweigt eine Leitung 24 ab, die zum Anhängersteuermodul (TCM) führt.

Nach dem Abzweigungspunkt der Leitung 24 ist weiter ein zusätzliches Steuerventil 22 vorgesehen, das ankommende Druckluft von der Leitung 46 sperren bzw. durchlassen kann.

Die Leitung 26 führt nach einem Knotenpunkt über die Leitung 28 zum Bistabilventil 30.

Das Bistabilventil 30 dient zur Ansteuerung der Federspeicherbremszylinder (spring brakes) eines Zugfahrzeugs. Die Federspeicherbremszylinder werden über die Ausgangsleitung 48 angesteuert.

Für die Ansteuerung des Bistabilventils 30 sind zwei Steuerventile 32, 36 vorgesehen.

Das erste Steuerventil 32 (TCI) dient dazu, den in der Leitung 26 anliegenden Druck 32 entsprechend sperren zu können, um diesen dann über die Steuerleitungen 34 und 38 dem pneumatischen Steuereingang des Bistabilventils 30 entsprechend zuführen zu können.

Über das Steuerventil 36 können die Steuerleitungen 34 und 38 entsprechend entlüftet werden.

Von der Leitung 38 zweigt eine weitere Leitung 40 ab, die mit der Ausgangsleitung 48 verbunden ist und in der eine Drossel 42 und ein Drucksensor 44 vorgesehen sind. Die Leitung 40 ist mit der Leitung 48 verbunden, so dass über diese Leitung auch das Anhängersteuermodul (TCM) und unter Beteiligung des Steuerventils 22 angesteuert werden kann.

Darüber hinaus ist noch ein weiteres redundantes Bremssystem vorgesehen.

Für das redundante Bremssystem ist eine zweite Druckluftzuleitung 50a (supply 2) vorgesehen. Die Leitung 50a kann an derselben bzw. einer anderen Druckluftquelle angeschlossen sein.

Die Leitung 50a, 50b führt stromabwärts des Rückschlagventils 14c zu einem Knotenpunkt 52, an dem von der Versorgungsleitung für das redundante Relaisventil 56 eine Leitung 54 abzweigt, die zur pneumatischen Ansteuerung des redundanten Relaisventils 56 dient.

Die Leitung 54 führt ebenfalls zu einer Steuerventilanordnung 58, 66, wie sie bereits beim Bistabilventil 30 vorstehend beschrieben wurde. Auch hier sind zwei Magnetventile 58, 66 vorgesehen, die als Steuerventile für das redundante Relaisventil 56 dienen.

Ebenso wie die Steuerventile 32 (TCI) und 36 (TCO), sind die Ventile 58 und 66 als 2/2-Magnetventile ausgeführt. Diese Steuerventile können elektronisch bzw. elektrisch angesteuert werden.

Das Steuerventil 58 kann die Steuerleitung 54 sperren und damit die Druckluftzufuhr zum Steuereingang des Relaisventils 56. Über das Ventil 66 kann die Leitung 60 und 64 entsprechend entlüftet werden.

Am Knotenpunkt 62 zweigt die Leitung 64 ab sowie die entsprechende Zuleitung zum Magnetventil 66.

Stromabwärts und ausgangsseitig des Relaisventils 56 ist die Verbindungsleitung zum redundanten Bremssystem (redundant brake system) 68 vorgesehen. In dieser Leitung ist ein Drucksensor 70 vorgesehen.

Die pneumatische Verschaltung der Steuerventile 58, 66, des Redundanzrelaisventils 56 sowie des Drucksensors 70 bildet eine funktionelle und strukturelle Baueinheit aus, die als sogenannter elektro-pneumatischer Modulator zum Einregeln eines Redundanzbremsdruckes an der Anschlussleitung für das redundante Bremssystem 68 ausgebildet ist.

Das redundante Bremssystem 68 ist insbesondere mit einer Betriebsbremseinrichtung eines Nutzfahrzeugs verbunden und zu deren Steuerung vorgesehen.

Des Weiteren sind ein erstes Steuerelektronikmodul A und wenigstens ein zweites Steuerelektronikmodul B vorgesehen.

Die Funktion des ersten Ausführungsbeispiels der Parkbremseinrichtung 10 gemäß Fig. 1 ist dabei wie folgt:
Zunächst wird aus vereinfachenden Gründen die Funktion der Parkbremseinrichtung 10 unter bestimmungsgemäßen Betriebsbedingungen, d.h. ohne Berücksichtigung des elektro-pneumatischen Modulators, erläutert.

Der Steuereingang des Relaisventils 30 des Zugfahrzeugs kann mittels den beiden Magnet-Steuerventile 32 und 36 je nach gewünschtem Parkzustand belüftet oder entlüftet werden, was ein Aktivieren oder Lösen der Federspeicherbremszylinder des Zugfahrzeugs über die Ausgangsleitung 48 zur Folge hat.

Für die elektronische Ansteuerung der Bistabilventilanordnung mit dem TCI-Ventil 32 und dem TCO-Ventil 36 (zur Ansteuerung des Bistabilventils bzw. Relaisventils 30) ist das Steuerelektronikmodul A vorgesehen und eingerichtet.

Die Ansteuerung der Steuerventile 32, 36 über das Steuerelektronikmodul A erfolgt unabhängig von dem Steuerelektronikmodul B, so dass diese Steuerventile 32, 36 auch bei Ausfall des Steuerelektronikmoduls B weiter ansteuerbar sind.

Des Weiteren kann durch die Abzweigungsleitung 40, in der die Drossel 42 angeordnet ist, eine zusätzliche Rückkopplungsverbindung zwischen dem Steuereingang und dem Ausgang des Relaisventils 30 vorgesehen werden, indem der Druck an dem Ausgang des Relaisventils 30 zu dem Steuereingang des Relaisventils zurückkoppelbar ist.

Mittels der Kombination aus Abzweigungsleitung 40 und der darin vorgesehen Drossel 42 ist insbesondere ein Luftverlust im Zuge eines Schaltvorgangs zwischen verschiedenen Betriebsmodi der Parkbremseinrichtung 10 verringerbar.

Ein Schaltvorgang zwischen den Betriebszuständen kann so schneller, effizienter und präziser erfolgen.

Insbesondere ist durch das Unterbinden eines Luftverlustes keine Nachregelung von Druckluft notwendig.

Gemäß den Schaltstellungen der Steuerventile 20, 22 wie in Fig. 1 gezeigt, wird die Ausgangsleitung 24 zum Anhängersteuermodul stets über die Ausgangsleitung 48 des Zugfahrzeug-Relaisventils 30 und über die Abzweigungsleitung 46 angesteuert.

Somit erfolgt gemäß Fig. 1 die Ansteuerung des Anhängersteuermoduls TCM (nicht in Fig. 1 gezeigt) in gleicher Weise wie die Ansteuerung der Federspeicherbremszylinder des Zugfahrzeugs.

Die Steuerventile 20, 22 dienen weiter zur Einstellung eines sogenannten Trailer-Test-Zustandes.

Dieser wird durch Umschaltung der Steuerventile 20, 22 in die jeweilig nicht in Fig. 1 dargestellte Schaltstellung herbeigeführt, so dass die Federspeicherbremszylinder des Zugfahrzeugs betätigt sind (durch entsprechende Ansteuerung der Steuerventile 32, 36) und die Federspeicherbremszylinder und/oder die Betriebsbremsen des Anhängers unbetätigt sind.

Die nachfolgende Funktionsbeschreibung bezieht sich auf eine Störung in der Parkbremseinrichtung 10 und/oder einer elektro-pneumatischen Betriebsbremseinrichtung (nicht in Fig. 1 gezeigt) eines Nutzfahrzeugs.

Für diesen Fall bzw. diese Fälle ist die Parkbremseinrichtung 10 derart eingerichtet, dass zwei redundante Rückfallebenen vorgesehen sind, die in diesem Fall bzw. diesen Fällen wirksam werden.

Die erste Rückfallebene ist derart ausgebildet, dass bei einer Störung oder eines (Teil-)Ausfalls der elektronischen Ansteuerung einer Betriebsbremseinrichtung diese dennoch über den elektropneumatischen Modulator und insbesondere über das Redundanz-Relaisventil 56 angesteuert werden kann.

In diesem Fall könnte sogar zusätzlich das Steuerelektronikmodul A ausfallen ohne jedoch Einfluss auf die Ansteuerung des elektropneumatischen Modulators zu haben, da dieser von dem unabhängigen Steuerelektronikmodul B angesteuert wird.

Für die die elektronische Ansteuerung der Redundanz-Steuerventilanordnung bzw. des elektropneumatischen Modulators mit dem IV-Ventil 58, dem OV-Ventil 66 (zur Ansteuerung des Redundanzrelaisventils 56) ist demzufolge gemäß erster Rückfallebene das Steuerelektronikmodul B vorgesehen und eingerichtet.

Die Ansteuerung des elektropneumatischen Modulators erfolgt derart, dass weiterhin die Betriebsbremsen jeder Achse des Nutzfahrzeugs, insbesondere des gesamten Zugfahrzeugs, angesteuert werden können.

Die zweite Rückfallebene ist aufbauend auf der ersten Rückfallebene ausgebildet.

Sie ist derart ausgebildet, dass bei einer zusätzlichen Störung bzw. eines (Teil-)Ausfalls des elektropneumatischen Modulators das noch intakte und unabhängige Steuerelektronikmodul A die beiden Steuerventile 32, 26 des Zugfahrzeugrelaisventils 30 derart ansteuert, dass die Federspeicherbremszylinder des Nutzfahrzeugs noch immer gestuft gebremst werden können.

Diese beiden Rückfallebenen werden insbesondere dann wirkungsvoll bzw. vorteilhaft, wenn die elektronische Ansteuerung der Betriebsbremseinrichtung des Nutzfahrzeugs autonom, d.h. ohne Einwirkung eines Fahrzeugführers, erfolgt.

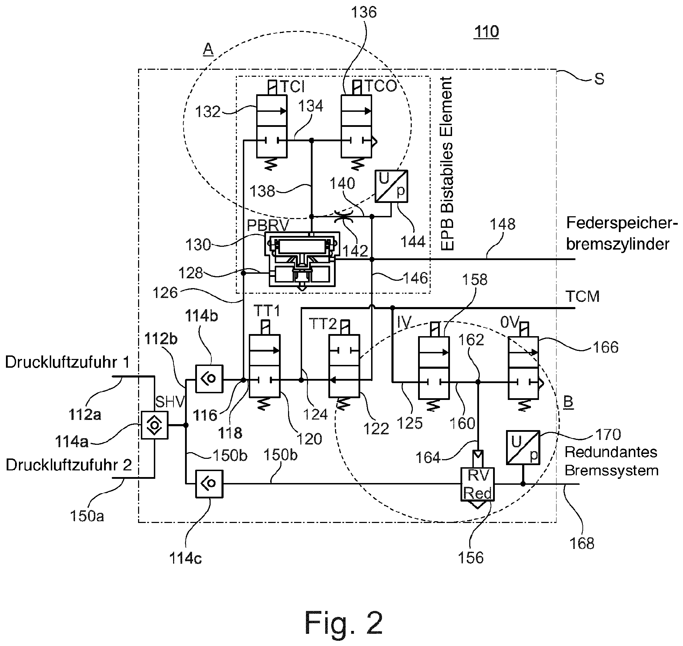

Fig. 2 zeigt ein zweites Ausführungsbeispiel einer Parkbremseinrichtung 110.

Die Parkbremseinrichtung 110 gemäß Fig. 2 ist dabei im Wesentlichen gleich wie das in Fig. 1 gezeigte Ausführungsbeispiel einer Parkbremseinrichtung 10 aufgebaut.

Dies gilt für sämtliche strukturellen als auch funktionalen Merkmale. Vergleichbare Merkmale oder Elemente sind mit demselben Bezugszeichen bezeichnet, jedoch um den Wert 100 erhöht.

Es bestehen jedoch die folgenden Unterschiede in struktureller und/oder funktionaler Hinsicht:
Das IV-Steuerventil 158 ist im gezeigten Ausführungsbeispiel hier über die Leitung 124 und Leitung 125 an die Leitungen 112a, 150b angeschlossen.

Diese Art der Verbindung des IV-Steuerventils 158 ermöglicht eine unabhängige Versorgung dieses Steuerventils von der Versorgungsleitung 150b, da die Versorgung über die Ausgangsleitung 124 für das Anhängersteuermodul TCM erfolgt.

Bezüglich der ersten und zweiten Rückfallebene unterscheidet sich das zweite Ausführungsbeispiel der Parkbremseinrichtung 110 jedoch nicht von dem ersten Ausführungsbeispiel, so dass in diesem Zusammenhang auf das erste Ausführungsbeispiel verwiesen wird.

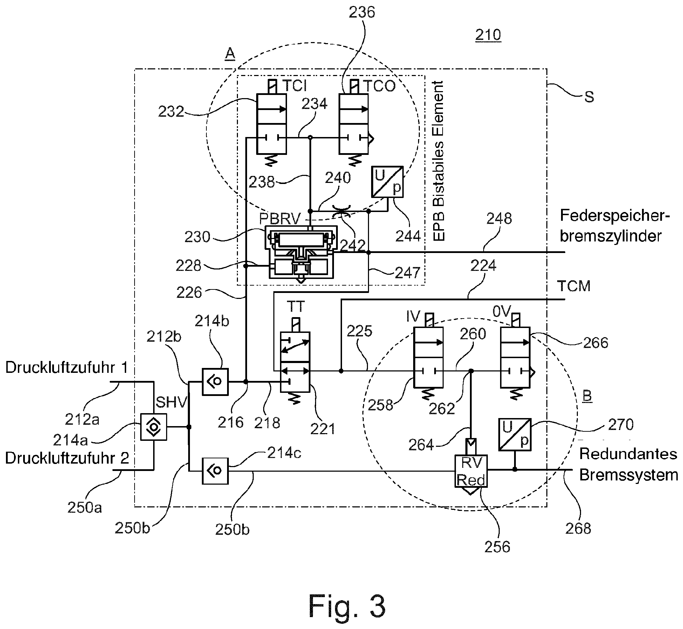

Fig. 3 zeigt ein drittes Ausführungsbeispiel einer Parkbremseinrichtung 210.

Die Parkbremseinrichtung 210 gemäß Fig. 3 ist dabei im Wesentlichen gleich wie das in Fig. 2 gezeigte zweite Ausführungsbeispiel einer Parkbremseinrichtung 110 aufgebaut.

Dies gilt für sämtliche strukturellen als auch funktionalen Merkmale. Vergleichbare Merkmale oder Elemente sind mit demselben Bezugszeichen bezeichnet, jedoch um den Wert 100 erhöht.

Es bestehen jedoch die folgenden Unterschiede in struktureller und/oder funktionaler Hinsicht:
Im Unterschied zum zweiten Ausführungsbeispiel gemäß Fig. 2 ist hier jedoch anschließend in der Leitung 218 ein 3/2-Wege-TT-Ventil 221 vorgesehen, das die beiden Steuerventile 120, 122 aus Fig. 2 ersetzt bzw. zu einem Steuerventil 221 vereint.

Damit kann, verglichen zum zweiten Ausführungsbeispiel, ein Steuerventil bei gleicher Funktion eingespart werden, was zu einem einfacheren und kostengünstigeren Aufbau des dritten Ausführungsbeispiels der Parkbremseinrichtung 210 führt.

Funktionell entspricht jedoch das dritte Ausführungsbeispiel der Parkbremseinrichtung 210 des zweiten Ausführungsbeispiels 110 aus Fig. 2.

Bezüglich der ersten und zweiten Rückfallebene unterscheidet sich das dritte Ausführungsbeispiel der Parkbremseinrichtung 210 nicht von dem zweiten Ausführungsbeispiel, so dass in diesem Zusammenhang auf das zweite Ausführungsbeispiel verwiesen wird.

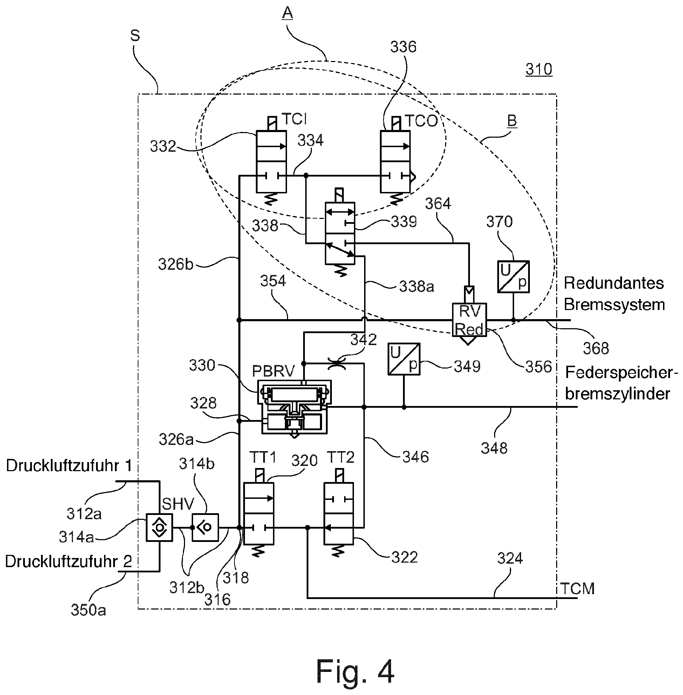

**Fig. 4** zeigt ein viertes Ausführungsbeispiel einer erfindungsgemäßen Parkbremseinrichtung 310.

Die Parkbremseinrichtung 310 gemäß Fig. 4 ist dabei im Wesentlichen gleich wie das in Fig. 1 gezeigte Ausführungsbeispiel einer Parkbremseinrichtung 10 aufgebaut.

Dies gilt für sämtliche strukturellen als auch funktionalen Merkmale. Vergleichbare Merkmale oder Elemente sind mit demselben Bezugszeichen bezeichnet, jedoch um den Wert 300 erhöht.

Es bestehen jedoch die folgenden Unterschiede in struktureller und/oder funktionaler Hinsicht:
Der elektropneumatische Modulator wird nicht wie in Fig. 1 von der zweiten Anschlussleitung 50a bzw. 50b versorgt, sondern von einer eigenen Versorgungsleitung 354, die zwischen dem Zugfahrzeug-Relaisventil 330 und dem Steuerventil 332 abzweigt.

Diese weitere Versorgungsleitung zweigt von der gemeinsamen Steuerleitung 326b ab, die als solche für das Zugfahrzeug-Relaisventil 330 und für das Redundanz-Relaisventil 356 dient.

Demnach kann der Abschnitt der zweiten Versorgungsleitung 50b samt Rückschlagventil 14c aus dem ersten Ausführungsbeispiel im vierten Ausführungsbeispiel entfallen.

Bei dem Ausführungsbeispiel gemäß Fig. 4 wird die Funktion des IV-Ventils und des OV-Ventils des elektropneumatischen Modulators durch das TCI-Ventil 332 und das TCO-Ventil 336 mitübernommen.

Stromabwärts des TCI-Ventils 332 und anschließend an die Leitung 338 ist ein 3/2-Wege-Ventil 339 vorgesehen, mittels dessen in Abhängigkeit von der Schaltstellung die Steuerleitung 338a des Bistabilventils bzw. des Relaisventils 330 mit Steuerdruck versorgt werden kann oder die Steuerleitung 364 des Redundanz-Relaisventils 356 mit Druck versorgt werden kann.

Alternativ und bei entsprechend nicht in Fig. 4 dargestellter Schaltstellung des 3/2-Wege-Ventils 339 kann über die Leitung 364 das Redundanz-Relaisventil 356 mit Druck versorgt und damit das Redundanz-Relaisventil 356 durchgeschaltet werden.

Das erste Steuerelektronikmodul A als auch das zweite Steuerelektronikmodul B sind in der Lage, unabhängig voneinander das TCI-Ventil 332 und das TCO-Ventil 336 anzusteuern.

Ebenfalls wird sowohl durch das erste Steuerelektronikmodul A als auch durch das zweite Steuerelektronikmodul B das 3/2-Wege-Ventil 339 angesteuert. Der Drucksensor 370 wird lediglich durch das zweite Steuerelektronikmodul B ausgewertet.

Die Funktionalität des vierten Ausführungsbeispiels der Parkbremseinrichtung 310 entspricht in Abhängigkeit beiden Schaltstellungen des 3/2-Wege-Magnetventils 339 im Wesentlichen der Funktionalität des ersten Ausführungsbeispiels aus Fig. 1.

Bezüglich der ersten Rückfallebene ist das Steuerelektronikmodul B derart ausgebildet, dass es bei einer Störung oder eines (Teil-)Ausfalls der elektronischen Ansteuerung einer Betriebsbremseinrichtung diese dennoch über den elektropneumatischen Modulator ansteuern kann.

Hierzu muss das Steuerelektronikmodul B jedoch zunächst das 3/2-Wege-Ventil 339 umschalten, so dass es mittels der beiden Steuerventile 332, 336 das Redundanz-Relaisventil 356 ansteuern kann.

Die Ansteuerung des elektropneumatischen Modulators erfolgt derart, dass weiterhin die Betriebsbremsen jeder Achse des Nutzfahrzeugs, insbesondere des Zugfahrzeugs, angesteuert werden können.

Die zweite Rückfallebene ist aufbauend auf der ersten Rückfallebene ausgebildet.

Sie ist derart ausgebildet, dass bei einer zusätzlichen Störung bzw. eines (Teil-)Ausfalls des Steuerelektronikmoduls B des elektropneumatischen Modulators das noch intakte und unabhängige Steuerelektronikmodul A das 3/2-Wege-Ventil 339 wieder in die gemäß Fig. 4 dargestellte Schaltstellung steuert.

Folglich können nun die beiden Steuerventile 332, 326 des Zugfahrzeugrelaisventils 330 derart ansteuert werden, dass die Federspeicherbremszylinder des gesamten Nutzfahrzeugs noch immer gestuft gebremst werden können.

Diese beiden Rückfallebenen werden insbesondere dann wirkungsvoll bzw. vorteilhaft, wenn die elektronische Ansteuerung der Betriebsbremseinrichtung des Nutzfahrzeugs autonom, d.h. ohne Einwirkung eines Fahrzeugführers, erfolgt.

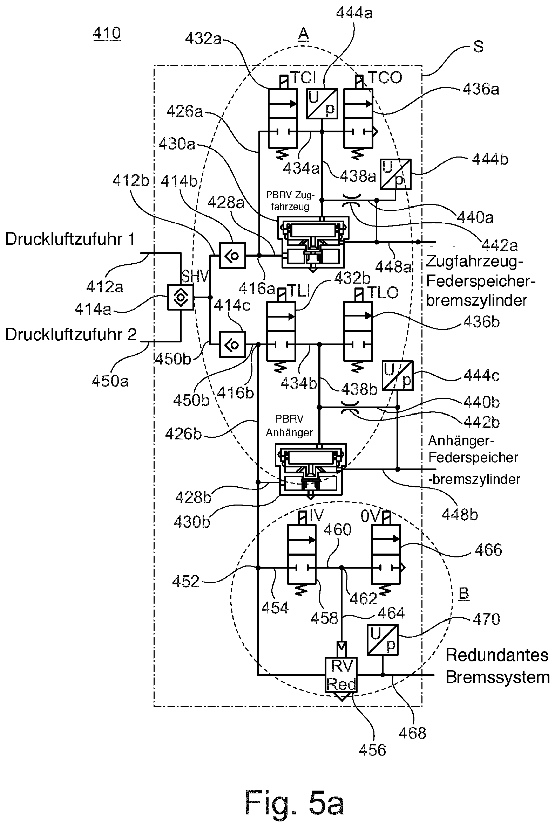

Fig. 5a zeigt ein fünftes Ausführungsbeispiel einer Parkbremseinrichtung 410.

Die Systemgrenze S der Parkbremseinrichtung 410 ist mit einer gestrichelten Linie eingezeichnet.

Die Parkbremseinrichtung 410 weist eine erste Druckluftzufuhr 412a bzw. Anschlussleitung 412a und eine zweite Druckluftzufuhr bzw. Anschlussleitung 450a, 450b auf.

Die erste und/oder zweite Druckluftzufuhr 412a, 450a können/kann beispielsweise an einem Kompressor angeordnet sein.

Alternativ oder zusätzlich kann vorgesehen sein, dass die erste und/oder zweite Druckluftzufuhr 412a, 450a von einem entsprechenden Anschluss für eine Parkbremseinrichtung eines Mehrkreisschutzventils (nicht in Fig. 5a gezeigt) versorgt werden/wird.

Die erste und zweite Anschlussleitung 412a, 450a vereinigen sich zunächst über ein Wechselventil 414a zu einer gemeinsamen Anschlussleitung zur Versorgung der Parkbremseinrichtung 410 mit Druckluft.

Das Wechselventil 414a ist als sogenanntes Select-High-Ventil 414a ausgestaltet.

Stromabwärts des Wechselventils 414a verzweigt sich die gemeinsame Anschlussleitung wieder zu der ersten und zweiten Anschlussleitung 412b, 450b.

In der ersten Anschlussleitung 412b ist ein erstes Rückschlagventil 414b angeordnet und in der zweiten Anschlussleitung 450b ist ein zweites Rückschlagventil 414c angeordnet.

Stromabwärts des ersten Rückschlagventils 414b ist ein erster Abzweigungspunkt 416a vorgesehen, bei dem die Leitung 428a zum ersten Bistabilventil 430a abzweigt, so dass das erste Bistabilventil 430a von der ersten Anschlussleitung 412a, 412b mit Druckluft versorgt wird.

Die erste Bistabilventilanordnung gemäß fünftem Ausführungsbeispiel aufweisend das erste Bistabilventil bzw. Relaisventil 430a samt den zugehörigen Steuerventilen 432a, 436a (TCI, TCO) ist im Wesentlichen gleich wie das entsprechende in Fig. 1 gezeigte Ausführungsbeispiel einer Bistabilventilanordnung aufgebaut.

Dies gilt für sämtliche strukturellen als auch funktionalen Merkmale. Vergleichbare Merkmale oder Elemente sind mit demselben Bezugszeichen bezeichnet, jedoch um den Wert 400a erhöht.

Das erste Relaisventil 430a ist mit den Federspeicherbremszylindern eines Zugfahrzeugs eines Nutzfahrzeugs verbunden.

Zusätzlich zu der ersten Bistabilventilanordnung, die von der ersten Anschlussleitung 412a, 412b versorgt wird bzw. mit dieser verbunden ist, weist das fünfte Ausführungsbeispiel eine zweite Bistabilventilanordnung auf, die von der zweiten Anschlussleitung 450a, 450b versorgt wird bzw. mit dieser verbunden ist

Die zweite Bistabilventilanordnung aufweisend das zweite Bistabilventil bzw. Relaisventil 430b samt den zugehörigen Steuerventilen 432b, 436b (TLI, TLO) ist im Wesentlichen gleich wie die erste Bistabilventilanordnung gemäß fünftem Ausführungsbeispiel aufgebaut.

Dies gilt für sämtliche strukturellen als auch funktionalen Merkmale. Vergleichbare Merkmale oder Elemente sind mit demselben Bezugszeichen bezeichnet, jedoch um den Buchstaben b geändert (vgl. entsprechend Fig. 5a).

Das zweite Relaisventil 430b ist mit den Federspeicherbremszylindern eines Anhängers eines Nutzfahrzeugs verbunden.

Darüber hinaus zweigt an dem Kotenpunkt der Versorgungsleitungen 426b, 428b eine weitere Versorgungsleitung ab, die einen elektropneumatischen Modulator mit Druckluft versorgt.

Dieser elektropneumatische Modulator gemäß fünftem Ausführungsbeispiel aufweisend das Redundanz-Bistabilventil bzw. Redundanz-Relaisventil 456 samt den zugehörigen Steuerventilen 458, 466 (IV, OV) ist im Wesentlichen gleich wie das in Fig. 1 gezeigte erste Ausführungsbeispiel eines elektropneumatischen Modulators aufgebaut.

Dies gilt für sämtliche strukturellen als auch funktionalen Merkmale. Vergleichbare Merkmale oder Elemente sind mit demselben Bezugszeichen bezeichnet, jedoch um den Wert 400 erhöht.

Die Funktion des fünften Ausführungsbeispiels der Parkbremseinrichtung 410 gemäß Fig. 5a ist im Hinblick auf die erste und zweite Rückfallebene (wie in den Fig. 1 bis 4 bereits grundsätzlich erläutert) wie folgt:
Die Ansteuerung der jeweiligen Steuerventilpaare bzw. Steuerventilanordnungen 432a, 436a; 432b, 436b für das erste und zweite Relaisventil 430a, 430b erfolgt über ein Steuerelektronikmodul A.

Entsprechend erfolgt die Ansteuerung der Steuerventile 458, 466 für das Redundanz-Relaisventil 456 über das Steuerelektronikmodul B, das unabhängig von dem Steuerelektronikmodul A arbeitet und zudem eine eigene Stromversorgung aufweist.

Die erste Rückfallebene ist derart ausgebildet, dass bei einer Störung oder eines (Teil-)Ausfalls der elektronischen Ansteuerung einer Betriebsbremseinrichtung (nicht in Fig. 5a gezeigt), diese dennoch über den elektropneumatischen Modulator angesteuert werden kann.

In diesem Fall könnte sogar zusätzlich das Steuerelektronikmodul A ausfallen, ohne jedoch Einfluss auf die Ansteuerung des elektropneumatischen Modulators zu haben, da dieser von dem unabhängigen Steuerelektronikmodul B angesteuert wird.

Für die die elektronische Ansteuerung der Redundanz-Steuerventilanordnung mit dem IV-Ventil 458, dem OV-Ventil 466 (zur Ansteuerung des Redundanzrelaisventils 456) ist demzufolge gemäß erster Rückfallebene das Steuerelektronikmodul B unabhängig bzw. redundant vorgesehen und eingerichtet.

Die Ansteuerung der Steuerventile 458, 466 erfolgt derart, dass weiterhin die Betriebsbremsen jeder Achse des Nutzfahrzeugs, insbesondere des Zugfahrzeugs, über das Redundanz-Relaisventil 456 angesteuert werden können.

Die zweite Rückfallebene ist aufbauend auf der ersten Rückfallebene ausgebildet.

Sie ist derart ausgebildet, dass bei einer zusätzlichen Störung bzw. eines (Teil-)Ausfalls des elektropneumatischen Modulators bzw. des Steuerelektronikmoduls B das weiterhin noch intakte und unabhängige Steuerelektronikmodul A steuerungsfähig bleibt.

Demnach steuert das Steuerelektronikmodul A die beiden Steuerventilpaare 432a, 436a; 432b, 436b des Zugfahrzeug-Relaisventils 430a bzw. des Anhänger-Relaisventils 430b derart an, dass die Federspeicherbremszylinder des Nutzfahrzeugs und des Anhängers noch immer gestuft gebremst werden können.

Diese beiden Rückfallebenen werden insbesondere dann wirkungsvoll bzw. vorteilhaft, wenn die elektronische Ansteuerung der Betriebsbremseinrichtung des Nutzfahrzeugs autonom, d.h. ohne Einwirkung eines Fahrzeugführers, erfolgt.

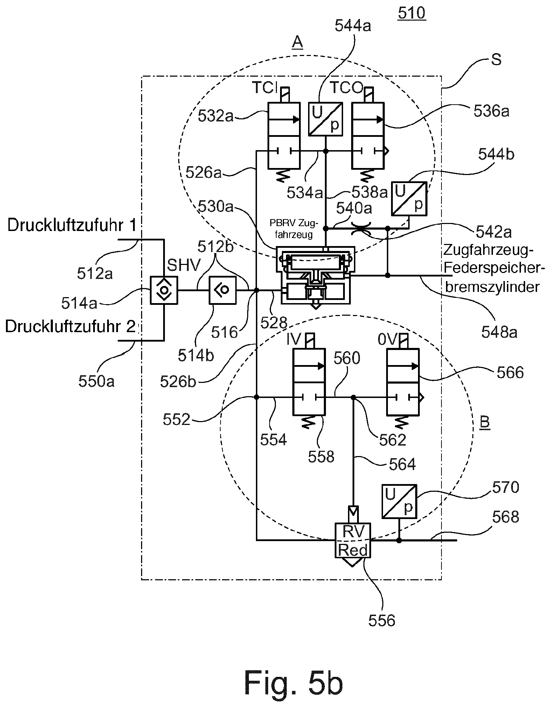

**Fig. 5b** zeigt ein sechstes Ausführungsbeispiel einer erfindungsgemäßen Parkbremseinrichtung 510.

Die Parkbremseinrichtung 510 ist dabei im Wesentlichen gleich wie das in Fig. 5a gezeigte fünfte Ausführungsbeispiel aufgebaut.

Vergleichbare Merkmale oder Elemente sind dabei jeweils mit demselben Bezugszeichen gekennzeichnet, das jedoch um den Wert 100 erhöht ist.

Es bestehen jedoch die folgenden Unterschiede in struktureller und/oder funktionaler Hinsicht:
Der Abschnitt der zweiten Versorgungsleitung 450b samt Rückschlagventil 414c gemäß Fig. 5a ist im sechsten Ausführungsbeispiel nicht vorhanden, so dass die Relaisventilanordnung für das Zugfahrzeug und die Redundanz-Relaisventilanordnung stromabwärts des Select-High-Ventils 514a lediglich von einer einzigen Anschlussleitung 512b, 550a versorgt werden.

Beim sechsten Ausführungsbeispiel fehlt weiter das Relaisventil 430b für den Anhänger sowie die zugehörigen Steuerventile 432b, 436b und die Rückkopplungsleitung zu dessen Steuereingang sowie der darin angeordnete Drucksensor 444c bzw. die Drossel 442b jeweils gemäß fünftem Ausführungsbeispiel.

Ferner weist das sechste Ausführungsbeispiel lediglich ein Rückschlagventil 514b zur Absicherung der Ausgangsleitung 548 des Zugfahrzeug-Relaisventils 530 und der Redundanz-Ausgangsleitung 568 auf.

Bei dem in Fig. 5b gezeigten sechsten Ausführungsbeispiel einer Parkbremseinrichtung 510 handelt es sich um eine sogenannte «Rigid» Ausführung, die demzufolge kein Relaisventil für einen Anhänger vorsieht.

Das Steuerelektronikmodul A dient somit lediglich der unabhängigen Ansteuerung der Steuerventile 532a, 536a für das Relaisventil 530a des Zugfahrzeugs. Dementsprechend dient das Steuerelektronikmodul B der unabhängigen Ansteuerung der Steuerventile 558, 566 für des Redundanz-Relaisventils 556.

Die Funktionalität des sechsten Ausführungsbeispiels der Parkbremseinrichtung 510, insbesondere bezüglich der Steuerelektronikmodule A und B, entspricht folglich bezüglich des Zugfahrzeugs und des redundanten Bremssystems der entsprechenden Funktionalität des fünften Ausführungsbeispiels aus Fig. 5a für diese Baugruppen.

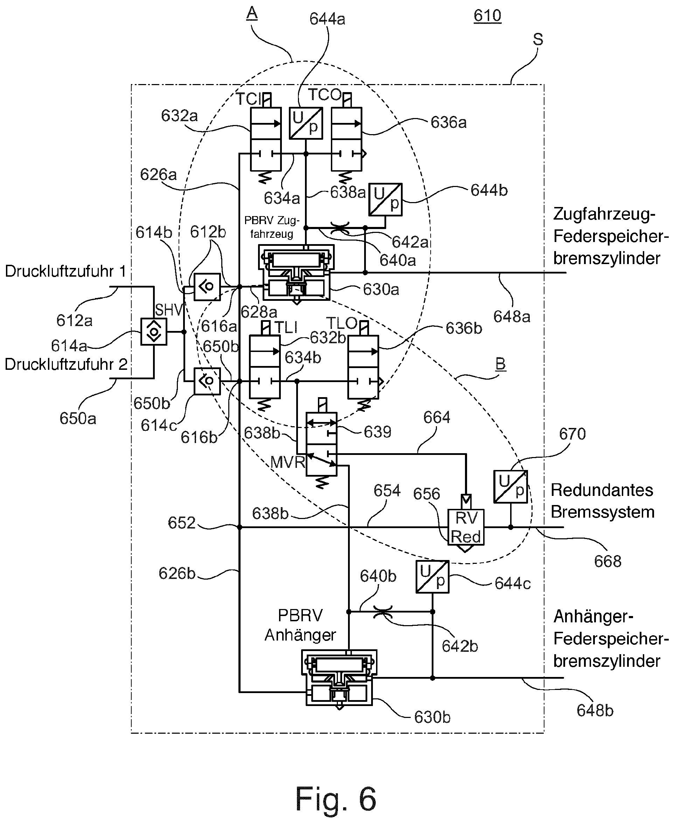

Fig. 6 zeigt ein siebtes Ausführungsbeispiel einer Parkbremseinrichtung 610.

Die Parkbremseinrichtung 610 gemäß Fig. 6 weist im Wesentlichen die gleichen strukturellen und funktionalen Merkmale auf, wie auch das in Fig. 5a gezeigte fünfte Ausführungsbeispiel einer Parkbremseinrichtung 410.

Gleiche oder ähnliche Merkmale oder Elemente sind mit demselben Bezugszeichen bezeichnet, das jedoch jeweils um den Wert 200 erhöht ist.

Es bestehen jedoch die folgenden Unterschiede in struktureller und/oder funktionaler Hinsicht:
Zur Ansteuerung des Redundanz-Relaisventils 656 werden nunmehr dieselben Steuerventile 632b und 636b benutzt, die auch zur Ansteuerung des Relaisventils bzw. Bistabilventils 630b für den Anhänger benutzt werden. Hierzu ist ein weiteres 3/2-WegeVentil 639 in der Abzweigungsleitung 638b nach dem Steuerventil 632b vorgesehen.

Das 3/2-Wege-Steuerventil 639 (MVR) dient somit zur Ansteuerung sowohl des Relaisventils 630b über die Steuerleitung 638b als auch zur Ansteuerung des Redundanz-Relaisventils 656 über die Steuerleitung 664.

Diese Ausführungsform weist den Vorteil auf, dass eine Doppelnutzung der Ventile TLI TLO 632b, 636b ermöglicht wird. Hierdurch kann insgesamt ein einfacherer Aufbau und die Einsparung eines IV- bzw. OV-Magnet-Steuerventils 458, 466 (siehe Fig. 5a) erreicht werden.

Das Steuerelektronikmodul A dient somit zur unabhängigen Ansteuerung der Steuerventile 632a, 636a für das Relaisventil 630a des Zugfahrzeugs sowie zur Ansteuerung der Steuerventile 632b, 636b und des 3/2-Wege-Steuerventils 639.

Dementsprechend dient das Steuerelektronikmodul B ebenfalls zur unabhängigen Ansteuerung der Steuerventile 632b, 636b und des 3/2-Wege-Steuerventils 639.

Die Steuerventile 632b, 636b sowie das 3/2-Wege-Steuerventil 639 müssen aufgrund ihrer doppelten Ansteuerungsfunktionalität für das Anhänger-Relaisventil 630b oder das Redundanz-Relaisventil 656 sowohl von dem Steuerelektronikmodul A als auch von dem Steuerelektronikmodul B unabhängig angesteuert werden können.

Bezüglich der ersten Rückfallebene ist das Steuerelektronikmodul B derart ausgebildet, dass es bei einer Störung oder eines (Teil-)Ausfalls der elektronischen Ansteuerung der Betriebsbremseinrichtung diese dennoch über den elektropneumatischen Modulator und insbesondere über das Redundanz-Relaisventil 656 ansteuern kann.

In diesem Fall muss das Steuerelektronikmodul B jedoch das 3/2-Wege-Ventil 639 zunächst umschalten, so dass es mittels der beiden Steuerventile 632b, 636b das Redundanz-Relaisventil 656 ansteuern kann.

Die Ansteuerung des elektropneumatischen Modulators erfolgt derart, dass weiterhin die Betriebsbremsen jeder Achse des Nutzfahrzeugs, insbesondere des Zugfahrzeugs, angesteuert werden können.

Die zweite Rückfallebene ist aufbauend auf der ersten Rückfallebene ausgebildet.

Sie ist derart ausgebildet, dass bei einer zusätzlichen Störung bzw. eines (Teil-)Ausfalls des Steuerelektronikmoduls B des elektropneumatischen Modulators das noch intakte und unabhängige Steuerelektronikmodul A zunächst das 3/2-Wege-Ventil 639 wieder in die gemäß Fig. 6 dargestellte Schaltstellung steuert bzw. bewegt.

Folglich können nun die beiden Steuerventilpaare 632a, 636a bzw. 632b, 636b des Zugfahrzeugrelaisventils 630a bzw. des Anhänger-Relaisventils 630b derart ansteuert werden, dass die Federspeicherbremszylinder des Nutzfahrzeugs und des Anhängers noch immer gestuft gebremst werden können.

Diese beiden Rückfallebenen werden insbesondere dann wirkungsvoll bzw. vorteilhaft, wenn die elektronische Ansteuerung der Betriebsbremseinrichtung des Nutzfahrzeugs autonom, d.h. ohne Einwirkung eines Fahrzeugführers, erfolgt.

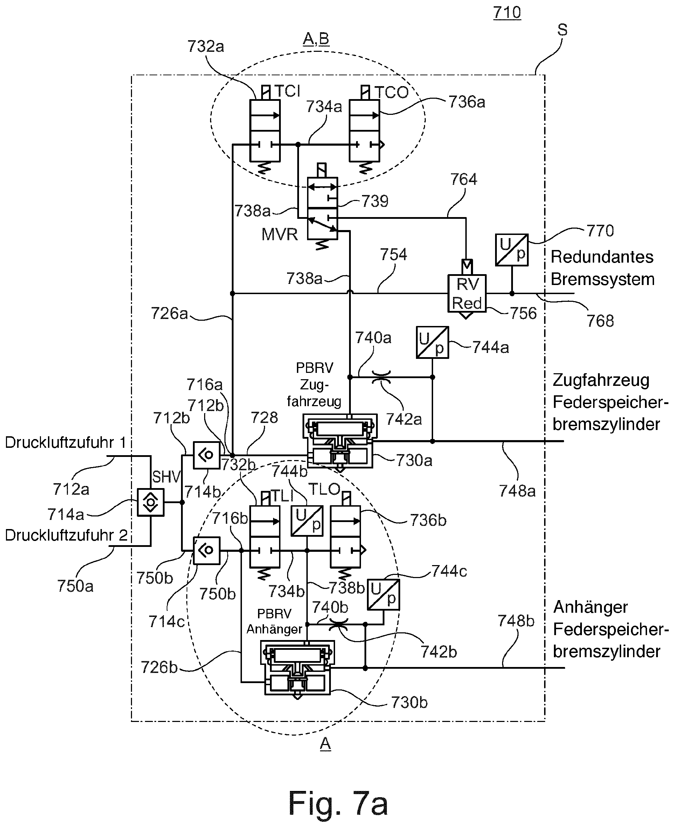

Fig. 7a zeigt ein achtes Ausführungsbeispiel einer Parkbremseinrichtung 710.

Das achte Ausführungsbeispiel weist im Wesentlichen die gleichen strukturellen und funktionalen Merkmale wie das in Fig. 5a gezeigte fünfte Ausführungsbeispiel der Parkbremseinrichtung 410 auf.

Vergleichbare Elemente oder Merkmale sind mit demselben Bezugszeichen gekennzeichnet, jedoch um den Wert 300 erhöht.

In diesem Ausführungsbeispiel ist jedoch die Ansteuerung des Redundanz-Relaisventils 756 mittels der Steuerventile 732a und 736a realisiert, die auch zur Ansteuerung des Relaisventils 730a des Zugfahrzeugs dienen.

Vergleichbar der Lösung gemäß Fig. 6 wird hier ebenfalls zwischen die Steuerventile 732a und 736a, die jeweils 2/2-Wege-Magnetventile sind, ein 3/2-Wege-Ventil (MVR) 739 in die Steuerleitung 738a zwischengeschaltet.

Dieses 3/2-Wege-Magnetventil (MVR) 739 kann sowohl zur Ansteuerung des Bistabilventils 730a für das Zugfahrzeug als auch für das Redundanz-Relaisventil 756 verwendet werden.

Im Gegensatz zu Fig. 6 erfolgt hier jedoch die Zwischenschaltung des 3/2-Wege-Ventils 739 zwischen die Steuerventile 732a und 736a, die das Relaisventil 730a für das Zugfahrzeug ansteuern, und nicht (wie bei Fig. 6) zwischen die Steuerventile 632b, 636b zur Ansteuerung des Anhängers, wobei die Funktionalität dennoch vergleichbar zu Fig. 6 ist.

Die Ausgestaltung und Ansteuerung der Relaisventilanordnung für den Anhänger samt Relaisventil 730b und Steuerventilen 732b, 736b ist gleich wie im fünften Ausführungsbeispiel gemäß Fig. 5a, wobei zusätzlich zwischen den Steuerventilen 732b, 736b ein Drucksensor 744b vorgesehen ist.

Die Steuerventile 732a, 736a sowie das 3/2-Wege-Steuerventil 739 müssen aufgrund ihrer doppelten Ansteuerungsfunktionalität für das Zugfahrzeug-Relaisventil 730a oder das Redundanz-Relaisventil 756 sowohl von dem Steuerelektronikmodul A als auch von dem Steuerelektronikmodul B unabhängig angesteuert werden können.

Die Steuerventile 732b, 736b für das Anhänger-Relaisventil 730b werden nur von dem Steuerelektronikmodul A in unabhängiger Weise angesteuert.

Bezüglich der ersten Rückfallebene ist das Steuerelektronikmodul B derart ausgebildet, dass es bei einer Störung oder eines (Teil-)Ausfalls der elektronischen Ansteuerung der Betriebsbremseinrichtung diese dennoch über den elektropneumatischen Modulator und insbesondere über das Redundanz-Relaisventil 756 ansteuern kann.

In diesem Fall muss das Steuerelektronikmodul B jedoch das 3/2-Wege-Ventil 739 umschalten, so dass es mittels der beiden Steuerventile 732a, 736a das Redundanz-Relaisventil 756 ansteuern kann.

Die Ansteuerung des Redundanz-Relaisventils 756 erfolgt sodann derart, dass weiterhin die Betriebsbremsen jeder Achse des Nutzfahrzeugs, insbesondere des Zugfahrzeugs, angesteuert werden können.

Die zweite Rückfallebene ist aufbauend auf der ersten Rückfallebene ausgebildet.

Sie ist derart ausgebildet, dass bei einer zusätzlichen Störung bzw. eines (Teil-)Ausfalls des Steuerelektronikmoduls B des elektropneumatischen Modulators das noch intakte und unabhängige Steuerelektronikmodul A zunächst das 3/2-Wege-Ventil 739 wieder in die gemäß Fig. 7a dargestellte Schaltstellung steuert bzw. bewegt.

Folglich können nun die beiden Steuerventilpaare 732a, 736a bzw. 732b, 736b des Zugfahrzeugrelaisventils 730a bzw. des Anhänger-Relaisventils 730b von dem Steuerelektronikmodul A derart ansteuert werden, dass die Federspeicherbremszylinder des Zugfahrzeugs und des Anhängers noch immer gestuft gebremst werden können.

Diese beiden Rückfallebenen werden insbesondere dann wirkungsvoll bzw. vorteilhaft, wenn die elektronische Ansteuerung der Betriebsbremseinrichtung des Nutzfahrzeugs autonom, d.h. ohne Einwirkung eines Fahrzeugführers, erfolgt.

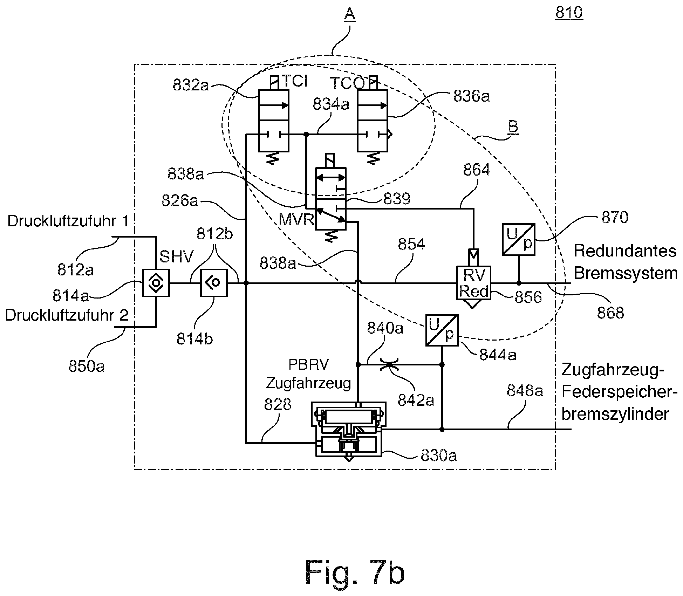

**Fig. 7b** zeigt ein neuntes Ausführungsbeispiel einer erfindungsgemäßen Parkbremseinrichtung 810.

Die Parkbremseinrichtung 810 entspricht im Wesentlichen dem achten Ausführungsbeispiel gemäß Fig. 7a.

Vergleichbare Merkmale sind mit einem im Vergleich zu Fig. 7a um den Wert 100 erhöhten Bezugszeichen versehen.

Bei dem in Fig. 7b gezeigten neunten Ausführungsbeispiel der Parkbremseinrichtung 810 handelt es sich auch um eine sog. «Rigid» Ausführung, die keine Relaisventilanordnung für einen Anhänger vorsieht.

Die Steuerventile 832a, 836a sowie das 3/2-Wege-Steuerventil 839 müssen aufgrund ihrer doppelten Ansteuerungsfunktionalität für das Zugfahrzeug-Relaisventil 830a oder das Redundanz-Relaisventil 856 sowohl von dem Steuerelektronikmodul A als auch von dem Steuerelektronikmodul B unabhängig angesteuert werden können.

Die Drucksignale der Drucksensoren 844a, 870 für das Zugfahrzeug-Relaisventil 830a bzw. Redundanz-Relaisventil 856 werden nur von dem Steuerelektronikmodul B erfasst.

Bezüglich der ersten Rückfallebene ist das Steuerelektronikmodul B derart ausgebildet, dass es bei einer Störung oder eines (Teil-)Ausfalls der elektronischen Ansteuerung der Betriebsbremseinrichtung diese dennoch über den zusätzlichen elektropneumatischen Modulator und insbesondere über das Redundanz-Relaisventil 856 ansteuern kann.

In diesem Fall muss das Steuerelektronikmodul B jedoch zunächst das 3/2-Wege-Ventil 839 umschalten (Schaltstellung nicht in Fig. 7b gezeigt), so dass es mittels der beiden Steuerventile 832a, 836a das Redundanz-Relaisventil 856 ansteuern kann.

Die Ansteuerung des Redundanz-Relaisventils 856 erfolgt sodann derart, dass weiterhin die Betriebsbremsen jeder Achse des Nutzfahrzeugs, insbesondere des Zugfahrzeugs, angesteuert werden können.

Die zweite Rückfallebene ist aufbauend auf der ersten Rückfallebene ausgebildet.

Sie ist derart ausgebildet, dass bei einer zusätzlichen Störung bzw. eines (Teil-)Ausfalls des Steuerelektronikmoduls B des elektropneumatischen Modulators das noch intakte und unabhängige Steuerelektronikmodul A zunächst das 3/2-Wege-Ventil 839 wieder in die gemäß Fig. 7b dargestellte Schaltstellung steuert bzw. bewegt.

Folglich können nun die beiden Steuerventile 832a, 836a des Zugfahrzeugrelaisventils 830a derart ansteuert werden, dass die Federspeicherbremszylinder des Zugfahrzeugs noch immer gestuft gebremst werden können.

Diese beiden Rückfallebenen werden insbesondere dann wirkungsvoll bzw. vorteilhaft, wenn die elektronische Ansteuerung der Betriebsbremseinrichtung des Nutzfahrzeugs autonom, d.h. ohne Einwirkung eines Fahrzeugführers, erfolgt.

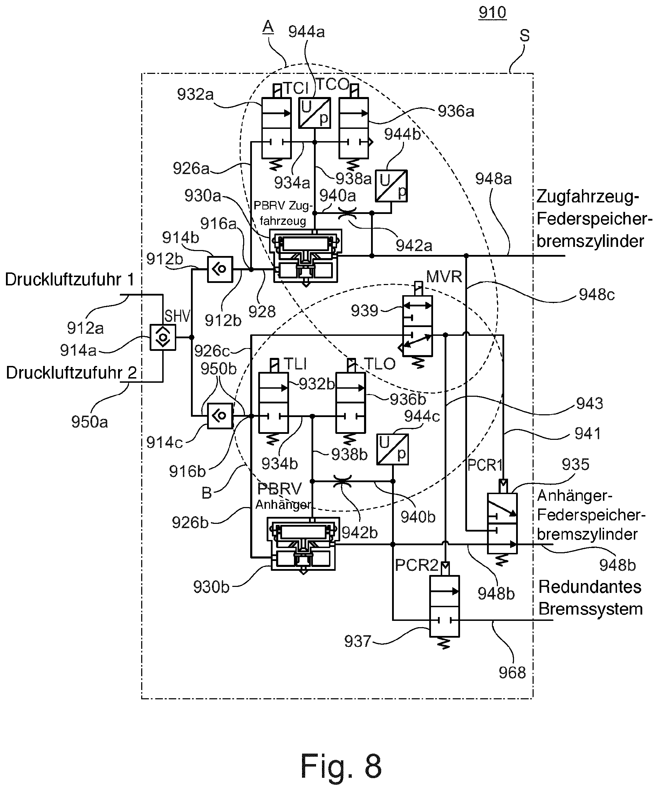

Fig. 8 zeigt ein zehntes Ausführungsbeispiel einer Parkbremseinrichtung 910.

Das zehnte Ausführungsbeispiel einer Parkbremseinrichtung 910 weist im Wesentlichen die gleichen strukturellen und funktionalen Merkmale wie das in Fig. 5a gezeigte Ausführungsbeispiel auf.

Vergleichbare Elemente und Merkmale sind mit gleichen Bezugszeichen versehen, jedoch um den Wert 500 erhöht.

Es bestehen jedoch die folgenden Unterschiede in struktureller und/oder funktionaler Hinsicht:
Grundsätzlich sind die jeweiligen Relaisventilanordnungen für die Ansteuerung der Federspeicherbremszylinder des Zugfahrzeugs sowie des Anhängers gleich aufgebaut wie beim fünften Ausführungsbeispiel gemäß Fig. 5a.

Hier sind jedoch zur Ansteuerung des redundanten Bremssystems die Ventile 935 und 937 (PCR1, PCR2) vorgesehen.

Das Ventil 937 ist als 2/2-Wege-Ventil ausgebildet, das pneumatisch angesteuert werden kann.

Die pneumatische Ansteuerung dieses Ventils 937 in seine Durchlassstellung erfolgt jedoch nur im Falle der ersten Rückfallebene, so dass sich infolgedessen das 3/2-Wege-Ventil (MVR) 939 in seinem belüftenden Schaltzustand (nicht in Fig. 8 gezeigt) befinden würde.

Das Ventil 935 hat einen ersten Arbeitseingang, der mittels einer Zweigleitung 948c über die Leitung 948a gespeist wird sowie einen weiteren Arbeitseingang, der im Wesentlichen über die Ausgangsleitung 948b sowie den zumindest teilweise geöffneten Schaltzustand des Anhänger-Relaisventils 930b mit Druckluft gespeist wird.

Über das Steuerventil 935 ist es somit möglich, die Federspeicherbremszylinder des Anhängers entweder über die Ausgangsleitung 948a zur Ansteuerung der Zugfahrzeug-Federspeicherbremszylinder oder über das Anhänger-Relaisventil 930b entsprechend ansteuern zu können.

Folglich werden die Ventile 935, 937 gemäß ihrer Verschaltung mit dem 3/2-WegeVentil 939 gleichzeitig be- oder entlüftet in Abhängigkeit davon, ob das 3/2-Wege-Ventil 939 in seinem Belüftungs- oder Entlüftungszustand geschaltet ist.

Die Steuerventile 932a, 936a für das Zugfahrzeug-Relaisventil 930a sowie das 3/2-Wege-Steuerventil 939 können gemäß Fig. 8 werden von dem Steuerelektronikmodul A unabhängig angesteuert.

Die Steuerventile 932b, 936b für das Anhänger-Relaisventil 930b sowie das 3/2-Wege-Steuerventil 939 werden von dem Steuerelektronikmodul B unabhängig angesteuert.

Bezüglich der ersten Rückfallebene ist das Steuerelektronikmodul B derart eingerichtet, dass es bei einer Störung oder eines (Teil-)Ausfalls der elektronischen Ansteuerung einer Betriebsbremseinrichtung diese dennoch über den zusätzlichen elektropneumatischen Modulator und insbesondere über das Redundanz-Relaisventil 956 ansteuern kann.

In diesem Fall muss das Steuerelektronikmodul B jedoch zunächst das 3/2-Wege-Ventil 939 umschalten (Schaltstellung nicht in Fig. 8 gezeigt), woraufhin das Steuerventil 937 in seine Durchlassstellung geschaltet wird.

Dadurch kann können die beiden Steuerventile 932b, 936b das Relais-Ventil 930b des Anhängers wirksam ansteuern, das gemäß erster Rückfallebene das Redundanz-Relaisventil ausbildet und das redundante Bremssystem über die nun geöffnete Ausgangsleitung 968 ansteuern kann.

Die Ansteuerung des Anhänger-Relaisventils 930b als Redundanz-Relaisventils erfolgt sodann derart, dass weiterhin die Betriebsbremsen jeder Achse des Nutzfahrzeugs, insbesondere des Zugfahrzeugs, angesteuert werden können.

Weiter ist bezüglich der ersten Rückfallebene das Steuerventil 935 in der Ausgangsleitung 948b umgeschaltet, so dass das Anhänger-Relaisventil 930b in dieser Rückfallebene die Federspeicherbremszylinder des Anhängers nicht mehr ansteuern kann.

Die Ansteuerung der Federspeicherbremszylinder des Anhängers erfolgt gemäß erster Rückfallebene über das Relaisventil 930a des Zugfahrzeugs und über die Zweigleitung 948c, die in dieser Rückfallebene mit der Ausgangsleitung 948b verbunden ist.

Die zweite Rückfallebene ist aufbauend auf der ersten Rückfallebene ausgebildet.

Sie ist derart ausgebildet, dass bei einer zusätzlichen Störung bzw. eines (Teil-)Ausfalls des Steuerelektronikmoduls B des elektropneumatischen Modulators das noch intakte und unabhängige Steuerelektronikmodul A zunächst das 3/2-Wege-Ventil 939 wieder in die gemäß Fig. 8 dargestellte Schaltstellung steuert bzw. bewegt.

Folglich werden auch die beiden durch das 3/2-Wege-Ventil 939 angesteuerten Ventile 935, 937 wieder in ihre gemäß Fig. 8 gezeigte Stellung zurückgeschaltet, wodurch sämtliche Ausgangsleitungen 948b, 968 für das Anhänger-Relaisventil 930b gesperrt sind.

Somit können nun die beiden Steuerventile 932a, 936a des Zugfahrzeugrelaisventils 930a mittels des Steuerelektronikmoduls A derart ansteuert werden, dass die Federspeicherbremszylinder des Zugfahrzeugs noch immer gestuft (über die Ausgangsleitung 948a) gebremst werden können.

Da nun die Ausgangsleitung 948a mit der weiteren Ausgangsleitung 948b über die Zweigleitung 948c verbunden ist, können auch die Federspeicherbremszylinder des Anhängers in gleicher Weise wie diejenigen des Zugfahrzeugs über das Zugfahrzeugrelaisventil 930a gesteuert werden.

Aus den vorstehenden Erläuterungen wird ersichtlich, dass das 3/2-Wege-Steuerventil 939 sowohl von dem Steuerelektronikmodul A als auch von dem Steuerelektronikmodul B angesteuert werden muss.

Dies ist deshalb erforderlich, da sonst im Falle der ersten Rückfallebene das Steuerventil 937 die Ausgangsleitung 968 zum redundanten Bremssystem nicht freigeben kann und die erste Rückfallebene somit wirkungslos wäre.

Für den Fall der zweiten Rückfallebene ist es zwingend erforderlich, dass das Steuerventil 935 wieder von der Stellung gemäß erster Rückfallebene (nicht in Fig. 8 gezeigt) in seine gemäß Fig. 8 dargestellte Stellung geschaltet wird, damit die Federspeicherbremszylinder des Anhängers weiter zumindest gestuft ansteuerbar sind.

Diese beiden Rückfallebenen werden insbesondere dann wirkungsvoll bzw. vorteilhaft, wenn die elektronische Ansteuerung der Betriebsbremseinrichtung des Nutzfahrzeugs autonom, d.h. ohne Einwirkung eines Fahrzeugführers, erfolgt.

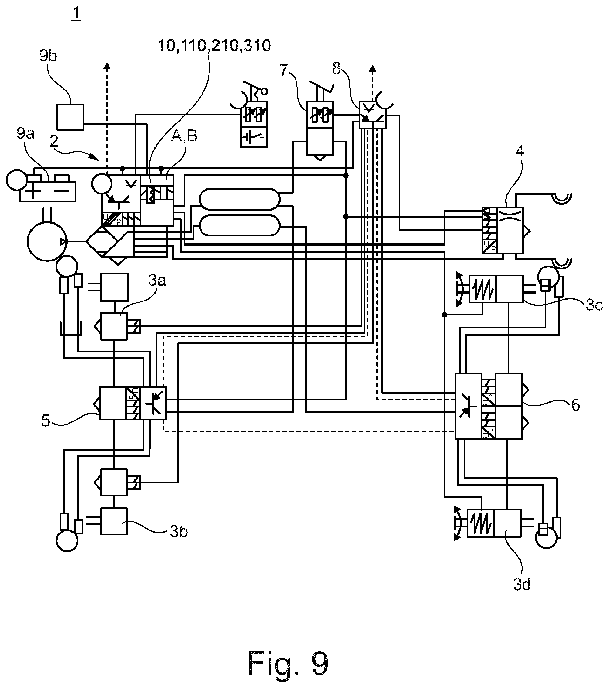

Fig. 9 zeigt ein erstes Ausführungsbeispiel eines redundanten Bremssystems 1 mit einer Parkbremseinrichtung gemäß Fig. 1 bis 4 und mit einer Betriebsbremseinrichtung.

Dieses Bremssystem 1 weist eine Luftaufbereitungseinheit 2 auf, die ferner die Parkbremseinrichtung 10, 110, 210, 310 gemäß Fig. 1 bis 4 umfasst.

Allerdings ist es nicht notwendigerweise erforderlich, dass die Parkbremseinrichtung 10, 110, 210, 310 Bestandteil der Luftaufbereitungseinheit 2 ist.

Vielmehr kann die Parkbremseinrichtung 10, 110, 210, 310 auch als separate Einrichtung ausgeführt sein.

Die Parkbremseinrichtung 10, 110, 210, 310 ist über die Redundanz-Ausgangsleitung (siehe Bezugszeichen 68, 168, 268, 368 der Fig. 1 bis 4) bzw. den Redundanz-Ausgangsanschluss direkt mit den Betriebsbremszylindern 3a, 3b der Vorderachse eines Nutzfahrzeugs über entsprechende Leitungen verbunden (nicht in Fig. 9 gezeigt).

Zusätzlich oder alternativ ist die Parkbremseinrichtung 10, 110, 210, 310 über die Redundanz-Ausgangsleitung bzw. den Redundanz-Ausgangsanschluss mit den Betriebsbremszylindern 3c, 3d der Hinterachse eines Nutzfahrzeugs über entsprechende Leitungen verbunden (ebenfalls nicht in Fig. 9 gezeigt).

Alternativ oder zusätzlich ist es denkbar, dass die Parkbremseinrichtung 10, 110, 210, 310 lediglich über einen elektro-pneumatischen 1-Kanal-Modulator 5 der Vorderachse und/oder über einen elektro-pneumatischen 2-Kanal-Modulator 6 der Hinterachse mit den entsprechenden Betriebsbremszylindern 3a, 3b, 3c, 3d verbunden ist.

Das Bremssystem 1 weist weiter ein Anhängersteuermodul 4 auf, das mit der Parkbremseinrichtung 10, 110, 210, 310 verbunden ist.

Somit kann auf ein eigenes Anhänger-Relaisventil 430b, 630b, 730b, 930b gemäß des fünften, siebten, achten und zehnten Ausführungsbeispiels der Parkbremseinrichtung 410, 610, 710, 910 verzichtet werden.

Alternativ ist es denkbar, auf das Anhängersteuermodul 4 zu verzichten und stattdessen die Parkbremseinrichtung 410, 610, 710, 910 gemäß fünftem, siebtem, achtem und zehntem Ausführungsbeispiel in dem Bremssystem 1 vorzusehen.

Weiter weist das elektronische Bremssystem 1 ein Fußbremsmodul 7 auf, das über einen Druckluftbehälter mit der Luftaufbereitungseinheit 2 verbunden ist und weiter mit dem elektro-pneumatischen 1-Kanal-Modulator 5 und/oder dem elektro-pneumatischen 2-Kanal-Modulator 6 verbunden ist.

Zudem ist eine Steuereinheit 8 vorgesehen, die unter anderem zur Ansteuerung des Anhängersteuermoduls 4, des elektro-pneumatischen 1-Kanal-Modulators 5 und des elektro-pneumatischen 2-Kanal-Modulators 6 dient.

Die Parkbremseinrichtung 10, 110, 210, 310 umfasst zudem die Steuerelektronikmodule A und B, die jeweils von einer separaten, d.h. galvanisch getrennten Stromquelle 9a, 9b mit elektrischer Energie versorgt werden und deren Funktion in den Figurenbeschreibungen der Figuren 1 bis 9 erläutert wurde.

### BEZUGSZEICHENLISTE

- 1: Elektronisches Bremssystem
- 2: Luftaufbereitungseinheit
- 3a: Betriebsbremszylinder
- 3b: Betriebsbremszylinder
- 3c: Betriebsbremszylinder
- 3d: Betriebsbremszylinder
- 4: Anhängersteuermodul
- 5: elektro-pneumatischer 1-Kanal-Modulator
- 6: elektro-pneumatischer 2-Kanal-Modulator
- 7: Fußbremsmodul
- 8: elektronische Steuereinheit
- 9a: elektrische Energiequelle
- 9b: elektrische Energiequelle

- 10: Parkbremseinrichtung
- 12a: Druckluftzufuhr
- 12b: erste Anschlussleitung
- 14a: Select-High-Ventil
- 14b: Rückschlagventil
- 14c: Rückschlagventil
- 16: Verzweigungspunkt
- 18: Leitung
- 20: Steuerventil
- 22: Steuerventil
- 24: Leitung
- 26: Leitung
- 28: Leitung
- 30: Bistabilventil
- 32: Steuerventil
- 34: Leitung
- 36: Steuerventil
- 38: Leitung
- 40: Leitung
- 42: Drossel
- 44: Drucksensor
- 46: Leitung
- 48: Leitung
- 50a: Druckluftzufuhr
- 50b: zweite Anschlussleitung
- 52: Knotenpunkt
- 54: Leitung
- 56: Relaisventil
- 58: Magnetventil
- 60: Leitung
- 62: Knotenpunkt
- 64: Leitung
- 66: Magnetventil
- 68: Bremssystem
- 70: Drucksensor

- S: Systemgrenze

- A: Steuerelektronikmodul
- B: Steuerelektronikmodul

- 110: Parkbremseinrichtung
- 112a: Druckluftzufuhr
- 112b: erste Anschlussleitung
- 114a: Select-High-Ventil114b Rückschlagventil
- 114c: Rückschlagventil
- 116: Verzweigungspunkt
- 118: Leitung
- 120: Steuerventil
- 122: Steuerventil
- 124: Leitung
- 125: Leitung
- 126: Leitung
- 128: Leitung
- 130: Bistabilventil
- 132: Steuerventil
- 134: Leitung
- 136: Steuerventil
- 138: Leitung
- 140: Leitung
- 142: Drossel
- 144: Drucksensor
- 146: Leitung
- 148: Leitung
- 150a: Druckluftzufuhr
- 150b: zweite Anschlussleitung
- 152: Knotenpunkt
- 154: Leitung
- 156: Relaisventil
- 158: Magnetventil
- 160: Leitung
- 162: Knotenpunkt
- 164: Leitung
- 166: Magnetventil
- 168: Bremssystem
- 170: Drucksensor

- 210: Parkbremseinrichtung
- 212a: Druckluftzufuhr
- 212b: erste Anschlussleitung
- 214a: Select-High-Ventil
- 214b: Rückschlagventil
- 214c: Rückschlagventil
- 216: Verzweigungspunkt
- 218: Leitung
- 220: Steuerventil
- 222: Steuerventil
- 224: Leitung
- 225: Leitung
- 226: Leitung
- 228: Leitung
- 230: Bistabilventil
- 232: Steuerventil
- 234: Leitung
- 236: Steuerventil
- 238: Leitung
- 240: Leitung
- 242: Drossel
- 244: Drucksensor
- 246: Leitung
- 247: Leitung
- 248: Leitung
- 250a: Leitung bzw. Druckluftzufuhr
- 250b: zweite Anschlussleitung
- 252: Knotenpunkt
- 254: Leitung
- 256: Relaisventil
- 258: Magnetventil
- 260: Leitung
- 262: Knotenpunkt
- 264: Leitung
- 266: Magnetventil
- 268: Bremssystem
- 270: Drucksensor
- 310: Parkbremseinrichtung
- 312a: Druckluftzufuhr
- 312b: erste Anschlussleitung
- 314a: Select-High-Ventil
- 314b: Rückschlagventil316 Verzweigungspunkt
- 318: Leitung
- 320: Steuerventil
- 322: Steuerventil
- 324: Leitung
- 326: Leitung
- 328: Leitung
- 330: Bistabilventil
- 332: Steuerventil
- 334: Leitung
- 336: Steuerventil
- 338: Leitung
- 340: Leitung
- 342: Drossel
- 344: Drucksensor
- 346: Leitung
- 348: Leitung
- 350a: Leitung bzw. Druckluftzufuhr
- 352: Knotenpunkt
- 354: Leitung
- 356: Relaisventil
- 358: Magnetventil
- 360: Leitung
- 362: Knotenpunkt
- 364: Leitung
- 366: Magnetventil
- 368: Bremssystem
- 370: Drucksensor
- 410: Parkbremseinrichtung
- 412a: Druckluftzufuhr
- 412b: erste Anschlussleitung
- 414a: Select-High-Ventil
- 414b: Rückschlagventil
- 414c: Rückschlagventil
- 416a: Verzweigungspunkt
- 416b: Verzweigungspunkt
- 426a: Leitung
- 426b: Leitung
- 428a: Leitung
- 428b: Leitung
- 430a: Bistabilventil
- 430b: Bistabilventil
- 432a: Steuerventil
- 432b: Steuerventil
- 434a: Leitung
- 434b: Leitung
- 436a: Steuerventil
- 436b: Steuerventil
- 438a: Leitung
- 438b: Leitung
- 440a: Leitung
- 440b: Leitung
- 442a: Drossel
- 442b: Drossel
- 444a: Drucksensor
- 444b: Drucksensor
- 444c: Drucksensor
- 448a: Leitung
- 448b: Leitung
- 450a: Druckluftzufuhr
- 450b: zweite Anschlussleitung
- 452: Knotenpunkt
- 454: Leitung
- 456: Relaisventil
- 458: Magnetsteuerventil
- 460: Leitung
- 462: Knotenpunkt
- 464: Leitung
- 466: Magnetsteuerventil
- 468: Bremssystem
- 470: Drucksensor

- 510: Parkbremseinrichtung
- 512a: Druckluftzufuhr
- 512b: erste Anschlussleitung
- 514a: Select-High-Ventil
- 514b: Rückschlagventil
- 526a: Leitung
- 526b: Leitung
- 528: Leitung
- 530a: Bistabilventil
- 532a: Steuerventil
- 534a: Leitung
- 536a: Steuerventil
- 538a: Leitung
- 540a: Leitung
- 542a: Drossel
- 544a: Drucksensor
- 544b: Drucksensor
- 548a: Leitung
- 550a: Druckluftzufuhr bzw. zweite Anschlussleitung
- 552: Knotenpunkt
- 554: Leitung
- 556: Relaisventil
- 558: Magnetsteuerventil
- 560: Leitung
- 562: Knotenpunkt
- 564: Leitung
- 566: Magnetsteuerventil
- 568: Bremssystem
- 570: Drucksensor

- 610: Parkbremseinrichtung
- 612a: Druckluftzufuhr
- 612b: erste Anschlussleitung
- 614a: Select-High-Ventil
- 614b: Rückschlagventil
- 614c: Rückschlagventil
- 616a: Verzweigungspunkt
- 616b: Verzweigungspunkt
- 626a: Leitung
- 626b: Leitung
- 628a: Leitung
- 630a: Bistabilventil
- 630b: Bistabilventil
- 632a: Steuerventil
- 632b: Steuerventil
- 634a: Leitung
- 634b: Leitung
- 636a: Steuerventil
- 636b: Steuerventil
- 638a: Leitung
- 638b: Leitung
- 639: 3/2-Wege-Steuerventil
- 640a: Leitung
- 640b: Leitung
- 642a: Drossel
- 642b: Drossel
- 644a: Drucksensor
- 644b: Drucksensor
- 644c: Drucksensor
- 648a: Leitung
- 648b: Leitung
- 650a: Druckluftzufuhr
- 650b: zweite Anschlussleitung
- 652: Knotenpunkt
- 654: Leitung
- 656: Relaisventil
- 664: Leitung
- 668: Bremssystem
- 670: Drucksensor

- 710: Parkbremseinrichtung
- 712a: Druckluftzufuhr
- 712b: erste Anschlussleitung
- 714a: Select-High-Ventil
- 714b: Rückschlagventil
- 714c: Rückschlagventil
- 716a: Verzweigungspunkt
- 716b: Verzweigungspunkt
- 726a: Leitung
- 726b: Leitung
- 728: Leitung
- 730a: Bistabilventil
- 730b: Bistabilventil
- 732a: Steuerventil
- 732b: Steuerventil
- 734a: Leitung
- 734b: Leitung
- 736a: Steuerventil
- 736b: Steuerventil
- 738a: Leitung
- 738b: Leitung
- 739: 3/2-Wege-Steuerventil
- 740a: Leitung
- 740b: Leitung
- 742a: Drossel
- 742b: Drossel
- 744a: Drucksensor
- 744b: Drucksensor
- 744c: Drucksensor
- 748a: Leitung
- 748b: Leitung
- 750a: Druckluftzufuhr
- 750b: zweite Anschlussleitung
- 754: Leitung
- 756: Relaisventil
- 764: Leitung
- 768: Bremssystem
- 770: Drucksensor

- 810: Parkbremseinrichtung
- 812a: Druckluftzufuhr
- 812b: erste Anschlussleitung
- 814a: Select-High-Ventil
- 814b: Rückschlagventil
- 826a: Leitung
- 828: Leitung
- 830a: Bistabilventil
- 832a: Steuerventil
- 834a: Leitung
- 836a: Steuerventil
- 838a: Leitung
- 839: 3/2-Wege-Steuerventil
- 840a: Leitung
- 842a: Drossel
- 844a: Drucksensor
- 848a: Leitung
- 850a: Druckluftzufuhr
- 854: Leitung
- 856: Relaisventil
- 864: Leitung
- 868: Bremssystem
- 870: Drucksensor

- 910: Parkbremseinrichtung
- 912a: Druckluftzufuhr
- 912b: erste Anschlussleitung
- 914a: Select-High-Ventil
- 914b: Rückschlagventil
- 914c: Rückschlagventil
- 916a: Verzweigungspunkt
- 916b: Verzweigungspunkt
- 926a: Leitung
- 926b: Leitung
- 928: Leitung
- 930a: Bistabilventil
- 930b: Bistabilventil
- 932a: Steuerventil
- 932b: Steuerventil
- 934a: Leitung
- 934b: Leitung
- 935: Steuerventil
- 936a: Steuerventil
- 936b: Steuerventil
- 937: Steuerventil
- 938a: Leitung
- 938b: Leitung
- 939: 3/2-Wege-Steuerventil
- 940a: Leitung
- 940b: Leitung
- 941: Steuerleitung
- 942a: Drossel
- 942b: Drossel
- 943: Steuerleitung
- 944a: Drucksensor
- 944b: Drucksensor
- 944c: Drucksensor
- 948a: Leitung
- 948b: Leitung
- 948c: Abzweigungsleitung
- 950a: Druckluftzufuhr
- 950b: zweite Anschlussleitung
- 968: Bremssystem

## Patentansprüche

1. Parkbremseinrichtung (10, 110, 210, 310, 410, 510, 610, 710, 810, 910) für ein Nutzfahrzeug, mit wenigstens einer ersten Anschlussleitung (12a, 112a, 212a, 312a, 412a, 512a, 628a, 738a, 828a, 938a) an eine Druckluftquelle und mit wenigstens einer zweiten Anschlussleitung (50a, 150a, 250a, 350a, 450a, 550a, 650a, 750a, 850a, 950a) an eine Druckluftquelle, mit wenigstens einer elektronisch ansteuerbaren Bistabilventilanordnung zur Ansteuerung eines Federspeicherbremszylinders, mit wenigstens einer weiteren elektronisch ansteuerbaren Redundanz-Steuerventilanordnung zum Ansteuerung eines redundanten Bremssystems, und mit wenigstens einer Versorgungsleitung (12b, 50b, 112b, 150b, 212b, 250b, 312b, 412b, 450b, 512b, 612b, 650b, 712b, 750b, 812b, 912b, 950b) ein Rückschlagventil (14b, 14c, 114b, 114c, 214b, 214c, 314b, 414b, 414c, 514b, 614b, 614c, 714b, 714c, 814b, 914b, 914c) stromaufwärts der Bistabilventilanordnung und der Redundanz-Steuerventilanordnung aufweisend,
**dadurch gekennzeichnet, dass**
wenigstens ein erstes Steuerelektronikmodul (A) und wenigstens ein zweites Steuerelektronikmodul (B) vorgesehen ist, die voneinander unabhängig betreibbar sind, wobei mittels des ersten Steuerelektronikmoduls (A) die Bistabilventilanordnung ansteuerbar ist und unabhängig davon mittels des zweiten Steuerelektronikmoduls (B) die Redundanz-Steuerventilanordnung ansteuerbar ist.

2. Parkbremseinrichtung (10, 110, 210, 310, 410, 510, 610, 710, 810, 910) nach Anspruch 1,
**dadurch gekennzeichnet, dass**
die Bistabilventilanordnung wenigstens ein TCI-Steuerventil (32, 132, 232, 332, 432, 532, 632, 732, 832, 932) umfasst, das derart beschaffen und eingerichtet ist, dass zumindest eine Steuerleitung (38, 138, 238, 338, 338a, 438a, 538, 638a, 738a, 838a, 938a) eines Bistabilventils (30, 130, 230, 330, 430a, 530, 630a, 730, 830a, 930a) der Bistabilventilanordnung steuerbar ist, wobei die Steuerleitung (38, 138, 238, 338, 338a, 438a, 538, 638a, 738a, 838a, 938a) an eine Druckluftquelle anschließbar ist.

3. Parkbremseinrichtung (10, 110, 210, 310, 410, 510, 610, 710, 810, 910) nach Anspruch 2,
**dadurch gekennzeichnet, dass**
das TCI- Steuerventil (32, 132, 232, 332, 432, 532, 632, 732, 832, 932) mittels des ersten Steuerelektronikmoduls (A) ansteuerbar ist.

4. Parkbremseinrichtung (10, 110, 210, 310, 410, 510, 610, 710, 810, 910) nach Anspruch 2 oder Anspruch 3,
**dadurch gekennzeichnet, dass**
die Bistabilventilanordnung wenigstens ein TCO-Steuerventil (36, 136, 236, 436a, 536, 636a, 736, 836a, 936a) umfasst, dass derart beschaffen und eingerichtet ist, dass die Steuerleitung (38, 138, 238, 338, 338a, 438a, 538, 638a, 738a, 838a, 938a) des Bistabilventils (30, 130, 230, 330, 430a, 530, 630a, 730, 830a, 930a) entlüftbar ist.

5. Parkbremseinrichtung (10, 110, 210, 310, 410, 510, 610, 710, 810, 910) nach Anspruch 4,
**dadurch gekennzeichnet, dass**
das TCO-Steuerventil (36, 136, 236, 336, 436a, 536, 636a, 736, 836a, 936a) mittels des ersten Steuerelektronikmoduls (A) ansteuerbar ist.

6. Parkbremseinrichtung (10, 110, 210, 410, 510) nach der vorhergehenden Ansprüche,
**dadurch gekennzeichnet, dass**
die Redundanz-Steuerventilanordnung wenigstens ein IV-Steuerventil (58, 158, 258, 458, 558) umfasst, das derart beschaffen und eingerichtet ist, dass zumindest eine Steuerleitung (64, 164, 264, 464, 564) eines Redundanz-Steuerventils (56, 156, 256, 556, 656) steuerbar ist.

7. Parkbremseinrichtung (10, 110, 210, 410, 510) nach Anspruch 6,
**dadurch gekennzeichnet, dass**
das IV-Steuerventil (58, 158, 258, 458, 558) mittels des zweiten Steuerelektronikmoduls (B) ansteuerbar ist.

8. Parkbremseinrichtung (10, 110, 210, 410, 510) nach Anspruch 6 oder Anspruch 7,
**dadurch gekennzeichnet, dass**
die Redundanz-Steuerventilanordnung wenigstens ein OV-Steuerventil (66, 166, 266, 466, 566) umfasst, das derart beschaffen und eingerichtet ist, dass die Steuerleitung (64, 164, 264, 464, 564) des Redundanz-Steuerventils (56, 156, 256) entlüftbar ist.

9. Parkbremseinrichtung (10, 110, 210, 310, 410, 510) nach Anspruch 8,
**dadurch gekennzeichnet, dass**
das OV-Steuerventil (66, 166, 266, 466, 566) mittels des zweiten Steuerelektronikmoduls (B) ansteuerbar ist.

10. Parkbremseinrichtung (10, 110, 210, 310, 410, 510, 610, 710, 810, 910) nach einem der vorhergehenden Ansprüche,
**dadurch gekennzeichnet, dass**
die erste Anschlussleitung (12a, 112a, 212a, 312a, 412a, 512a, 628a, 738a, 828a, 938a) an eine erste Druckluftquelle und die zweite Anschlussleitung (50a, 150a, 250a, 350a, 450a, 550a, 650a, 750a, 850a, 950a) an eine zweite von der ersten Druckluftquelle unterschiedlichen Druckluftquelle angeschlossen oder anschließbar ist.

11. Parkbremseinrichtung (10, 110, 210, 310, 410, 510, 610, 710, 810, 910) nach einem der Ansprüche 1 bis 9,
**dadurch gekennzeichnet, dass**
die erste Anschlussleitung (12a, 112a, 212a, 312a, 412a, 512a, 628a, 738a, 828a, 938a) und die zweite Anschlussleitung (50a, 150a, 250a, 350a, 450a, 550a, 650a, 750a, 850a, 950a) an dieselbe Druckluftquelle angeschlossen sind.

12. Parkbremseinrichtung (310, 710, 810) nach einem der Ansprüche 4 bis 10,
**dadurch gekennzeichnet, dass**
das TCI-Steuerventil (332, 732, 832) die Funktion eines IV-Steuerventils (358, 758, 858) mitübernimmt und sowohl zur Ansteuerung des Bistabilventils (330, 730, 830) als auch zur Ansteuerung des Redundanz-Steuerventils (356, 756, 856) dient.

13. Parkbremseinrichtung (310, 710, 810) nach einem der Ansprüche 4 bis 10, **dadurch gekennzeichnet, dass**
das TCO-Steuerventil (336, 736a, 836a) die Funktion eines OV-Steuerventils (366, 766, 866) mitübernimmt und sowohl zur Ansteuerung des Bistabilventils (330, 730a, 830a) als auch zur Ansteuerung des Redundanz-Steuerventils (356, 756, 856) dient.

## Claims

1. A parking brake device (10, 110, 210, 310, 410, 510, 610, 710, 810, 910) for a utility vehicle, having at least one first connecting line (12a, 112a, 212a, 312a, 412a, 512a, 628a, 738a, 828a, 938a) to a compressed-air source; at least one second connecting line (50a, 150a, 250a, 350a, 450a, 550a, 650a, 750a, 850a, 950a) to a compressed-air source; at least one electronically actuatable bistable valve arrangement for actuating a spring brake cylinder; at least one further electronically actuatable redundancy control valve arrangement for actuating a redundant brake system; and at least one supply line (12b, 50b, 112b, 150b, 212b, 250b, 312b, 412b, 450b, 512b, 612b, 650b, 712b, 750b, 812b, 912b, 950b) having a check valve (14b, 14c, 114b, 114c, 214b, 214c, 314b, 414b, 414c, 514b, 614b, 614c, 714b, 714c, 814b, 914b, 914c) upstream of the bistable valve arrangement and the redundancy control valve arrangement,
**characterised in that**
there are provided at least one first electronic control module (A) and at least one second electronic control module (B) that can be operated independently of one another, it being possible to actuate the bistable valve arrangement by means of the first electronic control module (A) and it being possible to actuate the redundancy control valve arrangement independently thereof by means of the second electronic control module (B).

2. A parking brake device (10, 110, 210, 310, 410, 510, 610, 710, 810, 910) according to claim 1,
**characterised in that**
the bistable valve arrangement comprises at least one TCI control valve (32, 132, 232, 332, 432, 532, 632, 732, 832, 932) that is specified and configured in such a manner as to be able to control at least one control line (38, 138, 238, 338, 338a, 438a, 538, 638a, 738a, 838a, 938a) of a bistable valve (30, 130, 230, 330, 430a, 530, 630a, 730, 830a, 930a) of the bistable valve arrangement, it being possible to connect the control line (38, 138, 238, 338, 338a, 438a, 538, 638a, 738a, 838a, 938a) to a compressed-air source.

3. A parking brake device (10, 110, 210, 310, 410, 510, 610, 710, 810, 910) according to claim 2,
**characterised in that**
it is possible to actuate the TCI control valve (32, 132, 232, 332, 432, 532, 632, 732, 832, 932) by means of the first electronic control module (A).

4. A parking brake device (10, 110, 210, 310, 410, 510, 610, 710, 810, 910) according to claim 2 or claim 3,
**characterised in that**
the bistable valve arrangement comprises at least one TCO control valve (36, 136, 236, 436a, 536, 636a, 736, 836a, 936a) that is specified and configured in such a manner as to be able to deaerate the control line (38, 138, 238, 338, 338a, 438a, 538, 638a, 738a, 838a, 938a) of the bistable valve (30, 130, 230, 330, 430a, 530, 630a, 730, 830a, 930a).

5. A parking brake device (10, 110, 210, 310, 410, 510, 610, 710, 810, 910) according to claim 4,
**characterised in that**
it is possible to actuate the TCO control valve (36, 136, 236, 336, 436a, 536, 636a, 736, 836a, 936a) by means of the first electronic control module (A).

6. A parking brake device (10, 110, 210, 410, 510) according to the preceding claims,
**characterised in that**
the redundancy control valve arrangement comprises at least one IV control valve (58, 158, 258, 458, 558) that is specified and configured in such a manner as to be able to control at least one control line (64, 164, 264, 464, 564) of a redundancy control valve (56, 156, 256, 556, 656).

7. A parking brake device (10, 110, 210, 410, 510) according to claim 6,
**characterised in that**
it is possible to actuate the IV control valve (58, 158, 258, 458, 558) by means of the second electronic control module (B).

8. A parking brake device (10, 110, 210, 410, 510) according to claim 6 or claim 7,
**characterised in that**
the redundancy control valve arrangement comprises at least one OV control valve (66, 166, 266, 466, 566) that is specified and configured in such a manner as to be able to deaerate the control line (64, 164, 264, 464, 564) of the redundancy control valve (56, 156, 256).

9. A parking brake device (10, 110, 210, 310, 410, 510) according to claim 8,
**characterised in that**
it is possible to actuate the OV control valve (66, 166, 266, 466, 566) by means of the second electronic control module (B).

10. A parking brake device (10, 110, 210, 310, 410, 510, 610, 710, 810, 910) according to any one of the preceding claims,
**characterised in that**
the first connecting line (12a, 112a, 212a, 312a, 412a, 512a, 628a, 738a, 828a, 938a) is connected or able to be connected to a first compressed-air source, and the second connecting line (50a, 150a, 250a, 350a, 450a, 550a, 650a, 750a, 850a, 950a) is connected or able to be connected to a second compressed-air source different from the first compressed-air source.

11. A parking brake device (10, 110, 210, 310, 410, 510, 610, 710, 810, 910) according any to any one of claims 1 to 9,
**characterised in that**
the first connecting line (12a, 112a, 212a, 312a, 412a, 512a, 628a, 738a, 828a, 938a) and the second connecting line (50a, 150a, 250a, 350a, 450a, 550a, 650a, 750a, 850a, 950a) are connected to the same compressed-air source.

12. A parking brake device (310, 710, 810) according any to any one of claims 4 to 10,
**characterised in that**
the TCI control valve (332, 732, 832) takes on the function of an IV control valve (358, 758, 858) and serves both to actuate the bistable valve (330, 730, 830) and to actuate the redundancy control valve (356, 756, 856).

13. A parking brake device (310, 710, 810) according any to any one of claims 4 to 10,
**characterised in that**
the TCO control valve (336, 736a, 836a) takes on the function of an OV control valve (366, 766, 866) and serves both to actuate the bistable valve (330, 730a, 830a) and to actuate the redundancy control redundancy control valve (356, 756, 856).

## Revendications

1. Dispositif (10, 110, 210, 310, 410, 510, 610, 710, 810, 910) de frein de stationnement d'un véhicule utilitaire, comprenant au moins une première ligne (12a, 112a, 212a, 312a, 412a, 512a, 628a, 738a, 828a, 938a) de raccordement à une source d'air comprimé, et comprenant au moins une deuxième ligne (50a, 150a, 250a, 350a, 450a, 550a, 650a, 750a, 850a, 950a) de raccordement à une source d'air comprimé, comprenant au moins un agencement de vanne bistable pouvant être commandé électroniquement pour la commande d'un cylindre de frein à ressort accumulateur, et comprenant au moins un autre agencement de vanne de commande de redondance pouvant être commandé électroniquement pour la commande d'un système de frein redondant et comprenant au moins une ligne (12b, 50b, 112b, 150b, 212b, 250b, 312b, 412b, 450b, 512b, 612b, 650b, 712b, 750b, 812b, 912b, 950b) d'alimentation ayant un clapet (14b, 14c, 114b, 114c, 214b, 214c, 314b, 414b, 414c, 514b, 614b, 614c, 714b, 714c, 814b, 914b, 914c) antiretour en amont de l'agencement de vanne bistable et de l'agencement de vanne de commande de redondance, **caractérisé en ce qu'**
il est prévu au moins un premier module (A) d'électronique de commande, et au moins un deuxième module (B) d'électronique de commande, qui peuvent fonctionner indépendamment l'un de l'autre, dans lequel l'agencement de vanne bistable peut être commandé au moyen du premier module (A) d'électronique de commande et, indépendamment de cela, l'agencement de vanne de commande de redondance peut être commandé au moyen du deuxième module (B) d'électronique de commande.

2. Dispositif (10, 110, 210, 310, 410, 510, 610, 710, 810, 910) de frein de stationnement suivant la revendication 1, **caractérisé en ce que**
l'agencement de vanne bistable comprend au moins une vanne (32, 132, 232, 332, 432, 532, 632, 732, 832, 932) de commande TCI, qui est faite et agencée de manière à ce qu'au moins une ligne (38, 138, 238, 338, 338a, 438a, 538, 638a, 738a, 838a, 938a) de commande d'une vanne (30, 130, 230, 330, 430a, 530, 630a, 730, 830a, 930a) bistable de l'agencement de vanne bistable puisse être commandée, dans lequel la ligne (38, 138, 238, 338, 338a, 438a, 538, 638a, 738a, 838a, 938a) de commande peut être raccordée à une source d'air comprimé.

3. Dispositif (10, 110, 210, 310, 410, 510, 610, 710, 810, 910) de frein de stationnement suivant la revendication 2,
**caractérisé en ce que**
la vanne (32, 132, 232, 332, 432, 532, 632, 732, 832, 932) de commande TCI peut être commandée au moyen du premier module (A) d'électronique de commande.

4. Dispositif (10, 110, 210, 310, 410, 510, 610, 710, 810, 910) de frein de stationnement suivant la revendication 2 ou la revendication 3,
**caractérisé en ce que**
l'agencement de vanne bistable comprend au moins une vanne (36, 136, 236, 436a, 536, 636a, 736, 836a, 936a) de commande TCO, qui est faite et agencée de manière à ce que la ligne (38, 138, 238, 338, 338a, 438a, 538, 638a, 738a, 838a, 938a) de commande de la vanne (30, 130, 230, 330, 430a, 530, 630a, 730, 830a, 930a) bistable puisse être purgée.

5. Dispositif (10, 110, 210, 310, 410, 510, 610, 710, 810, 910) de frein de stationnement suivant la revendication 4, **caractérisé en ce que**
la vanne (36, 136, 236, 336, 436a, 536, 636a, 736, 836a, 936a) de commandes TCO peut être commandée au moyen du premier module (A) d'électronique de commande.

6. Dispositif (10, 110, 210, 410, 510) de frein de stationnement suivant les revendications précédentes,
**caractérisé en ce que**
l'agencement de vanne de commande de redondance comprend au moins une vanne (58, 158, 258, 458, 558) de commande IV qui est faite et agencée de manière à ce qu'au moins une ligne (64, 164, 264, 464, 564) de commande d'une vanne (56, 156, 256, 556, 656) de commande de redondance puisse être commandée.

7. Dispositif (10, 110, 210, 410, 510) de frein de stationnement suivant la revendication 6,
**caractérisé en ce que**
la vanne (58, 158, 258, 458, 558) de commandes IV peut être commandée au moyen du deuxième module (B) d'électronique de commande.

8. Dispositif (10, 110, 210, 410, 510) de frein de stationnement suivant la revendication 6 ou la revendication 7, **caractérisé en ce que**
l'agencement de vanne de commande de redondance comprend au moins une vanne (66, 166, 266, 466, 566) de commande OV, qui est faite et agencée de manière à ce que la ligne (64, 164, 264, 464, 564) de commande de la vanne (56, 156, 256) de commande de redondance puisse être purgée.

9. Dispositif (10, 110, 210, 310, 410, 510) de frein de stationnement suivant la revendication 8,
**caractérisé en ce que**
la vanne (66, 166, 266, 466, 566) de commande OV peut être commandée au moyen du deuxième module (B) d'électronique de commande.

10. Dispositif (10, 110, 210, 310, 410, 510, 610, 710, 810, 910) de frein de stationnement suivant l'une des revendications précédentes,
**caractérisé en ce que**
la première ligne (12a, 112a, 212a, 312a, 412a, 512a, 628a, 738a, 828a, 938a) de raccordement est raccordée à une première source d'air comprimé ou peut l'être, et la deuxième ligne (50a, 150a, 250a, 350a, 450a, 550a, 650a, 750a, 850a, 950a) de raccordement est raccordée à une deuxième source d'air comprimé différente de la première source d'air comprimé ou peut l'être.

11. Dispositif (10, 110, 210, 310, 410, 510, 610, 710, 810, 910) de frein de stationnement suivant l'une des revendications 1 à 9, **caractérisé en ce que**
la première ligne (12a, 112a, 212a, 312a, 412a, 512a, 628a, 738a, 828a, 938a) de raccordement et la deuxième ligne (50a, 150a, 250a, 350a, 450a, 550a, 650a, 750a, 850a, 950a) de raccordement, sont raccordées à la même source d'air comprimé.

12. Dispositif (310, 710, 810) de frein de stationnement suivant l'une des revendications 4 à 10,
**caractérisé en ce que**
la vanne (332, 732, 832) de commande TCI prend en charge la fonction d'une vanne (358, 758, 858) de commande IV et sert à la fois à la commande de la vanne (330, 730, 830) bistable et à la commande de la vanne (356, 756, 856) de commande de redondance.

13. Dispositif (310, 710, 810) de frein de stationnement suivant l'une des revendications 4 à 10,
**caractérisé en ce que**
la vanne (336, 736a, 836a) de commande TCO prend en charge la fonction d'une vanne (366, 766, 866) de commande OV et sert à la fois à la commande de la vanne (330, 730a, 830a) bistable et à la commande de la vanne (356, 756, 856) de commande de redondance.
